# EUROPEAN PATENT APPLICATION

(11) **EP 4 786 477 A1**
(43) Date of publication of application: **05.08.2026**
(21) Application number: 24872325.6
(22) Date of filing: 25.09.2024
(51) Int. Cl.: C07F 15/02, B01J 31/22, B01J 31/24, C07B 61/00, C07F 7/08, C08G 77/04

(54) **IRON COMPLEX COMPOUND AND METHOD FOR PRODUCING SAME, AND METHOD FOR PRODUCING ORGANOSILICON COMPOUND**

(30) Priority: 27.09.2023 JP 2023166056
(71) Applicant: The Kitasato Institute, Tokyo 108-8641 (JP)
(72) Inventor: KAMITANI Masahiro, Tokyo 108-8641 (JP)
(74) Representative: Vossius & Partner Patentanwälte Rechtsanwälte mbB
(86) International application number: PCT/JP2024/034272
(87) International publication number: WO 2025/070539

(57) **Abstract**

The present invention provides a novel hydrosilylation catalyst which uses inexpensive and abundant iron, and is suitable for use in organosilicon industries. Provides is an iron complex compound represented by formula (1): (L)FeAₙ₁. (In the formula, n1 represents 2 or 3, and each A independently represents -OR¹, -OC(=O)R², or -NR³R⁴; R¹, R², R³, and R⁴ each independently represent an optionally substituted hydrocarbon group having 13 to 24 carbon atoms, or -Si(CH₃)₂-[OSi(CH₃)₂]ₘ-CH₃, and m represents an integer of 0 to 11; in cases where two A moieties are each -OR¹ and R¹ is an optionally substituted hydrocarbon group having 13 to 24 carbon atoms, the R¹ moieties may be linked to each other to form a cyclic structure -O-C(R^{a})-O-, and R^{a} represents an optionally substituted hydrocarbon group having 13 to 24 carbon atoms; and L represents a tridentate ligand which has a specific structure.)

## Description

### Technical Field

The present invention relates to an iron complex compound and a method for producing the same, and a method for producing an organosilicon compound.

### Background Art

In the organosilicon industry, hydrosilylation catalysts are widely used in the production of cured silicone materials and organosilicon compounds. Hydrosilylation catalysts cleave silicon-hydrogen bonds in hydrosilanes and catalyze addition reaction to carbon-carbon unsaturated bonds in alkenes.

As hydrosilylation catalysts, industrial platinum catalysts including Karstedt's catalyst have been used for a long time. Platinum catalysts are highly active, but have problems in terms of being expensive and unstable in supply, having poor selectivity, and being difficult to recover, etc.; and hence there has been a demand for the development of techniques to substitute other metals for platinum.

In recent years, studies have been made on the development of hydrosilylation catalysts based on iron which is inexpensive and abundant. As an iron-based hydrosilylation catalyst, an iron complex compound with a bisiminopyridine ligand has been known, which was developed by P. J. Chirik, et al. (Non-patent Literature 1). However, this catalyst has problems in terms of being unstable in the air and being difficult to handle, etc.

As an iron catalyst with increased air stability, an iron complex compound with a tridentate ligand has been known, which was developed by the inventors of the present invention (Patent Literatures 1 and 2, Non-patent Literature 2). The above iron complex compound with a tridentate ligand is practically advantageous in terms of having high catalytic activity for hydrosilylation reactions and also being easy to handle in the air.

### Citation List

### Patent Literature

Patent Literature 1: JP 2020-117474 A
Patent Literature 2: JP 2020-50637 A

### Non-patent Literature

Non-patent Literature 1: P. J. Chirik et. al. Science 2012, 335, 567-570
Non-patent Literature 2: M. Kamitani, Chem. Commun. 2021, 57, 13246-13258
Non-patent Literature 3: Kamitani, M.; Kusaka, H.; Toriyabe, T.; Yuge, H., Bull. Chem. Soc. Jpn., 2018, 91, 1429-1435.
Non-patent Literature 4: Britovsek, G. J. P.; Gibson, V. C.; McTavish, S. J.; Solan, G. A.; White, A. J. P.; Williams, D. J.; Britovsek, G. J. P.; Kimberley, B. S.; Maddox, P. J. Chem. Commun. 1998, 849-850.
Non-patent Literature 5: Kamitani, M.; Yujiri, K.; Yuge, H. Organometallics 2020, 39, 3535-3539
Non-patent Literature 6: Kamitani, M.; Kanemitsu, K.; Yujiri, K.; Yuge, H. Organometallics 2023, 42, 1839-1848

### Summary of Invention

### Technical Problem

There has been a demand for the further development of hydrosilylation catalysts which are based on inexpensive and abundant iron and are preferred for use in the organosilicon industry.

### Solution to Problem

The present invention encompasses the aspects and embodiments shown below.
[1] An iron complex compound represented by formula (1):

   (L)FeAₙ₁ (1)

   wherein
   n1 is 2 or 3,
   each A is independently -OR¹, -OC(=O)R², or -NR³R⁴;
   R¹, R², R³ and R⁴ are each independently an optionally substituted hydrocarbon group containing 13 to 24 carbon atoms, or -Si(CH₃)₂-[OSi(CH₃)₂]ₘ-CH₃, wherein m is an integer of 0 to 11;
   when two A are each -OR¹, wherein R¹ is an optionally substituted hydrocarbon group containing 13 to 24 carbon atoms, both R¹ may be linked together to form the cyclic structure -O-C(R^{a})-O-, wherein R^{a} is an optionally substituted hydrocarbon group containing 13 to 24 carbon atoms; and
   L represents a tridentate ligand of formula (L-1): 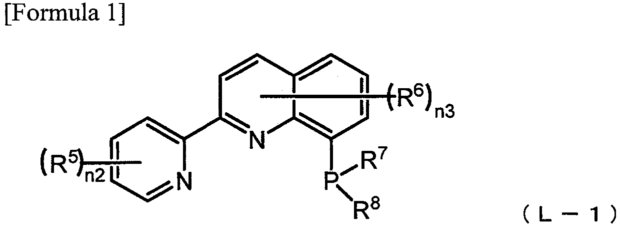 wherein
      R⁵ and R⁶ are each independently an optionally substituted aliphatic hydrocarbon group containing 1 to 6 carbon atoms, an optionally substituted aromatic hydrocarbon group containing 6 to 12 carbon atoms, or a halogen atom;
      R⁷ and R⁸ are each independently an optionally substituted aliphatic hydrocarbon group containing 1 to 12 carbon atoms, or an optionally substituted aromatic hydrocarbon group containing 6 to 12 carbon atoms, provided that when R⁷ and R⁸ are each an optionally substituted aliphatic hydrocarbon group containing 1 to 12 carbon atoms, R⁷ and R⁸ may be linked together to form a cyclic structure;
      n2 is an integer of 0 to 4, provided that R⁵ is attached to a carbon atom in the pyridine scaffold; and
      n3 is an integer of 0 to 5, provided that R⁶ is attached to a carbon atom in the quinoline scaffold,
         or formula (L-2): 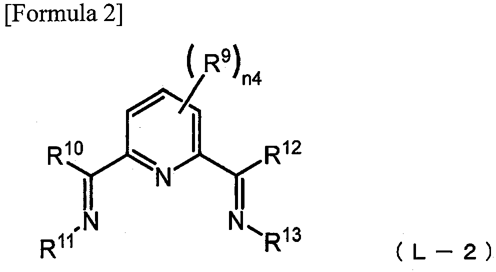 wherein
         each R⁹ is independently an optionally substituted aliphatic hydrocarbon group containing 1 to 6 carbon atoms, an optionally substituted aromatic hydrocarbon group containing 6 to 12 carbon atoms, or a halogen atom;
         R¹⁰, R¹¹, R¹² and R¹³ are each independently a hydrogen atom, an optionally substituted aliphatic hydrocarbon group containing 1 to 12 carbon atoms, or an optionally substituted aromatic hydrocarbon group containing 6 to 12 carbon atoms, provided that when R¹⁰ and R¹¹ are each an optionally substituted aliphatic hydrocarbon group containing 1 to 12 carbon atoms, R¹⁰ and R¹¹ may be linked together to form a cyclic structure, and when R¹² and R¹³ are each an optionally substituted aliphatic hydrocarbon group containing 1 to 12 carbon atoms, R¹² and R¹³ may be linked together to form a cyclic structure; and
         n4 is an integer of 0 to 3, provided that R⁹ is attached to a carbon atom in the pyridine scaffold.
[2] The iron complex compound according to [1] above, which is represented by formula (1A-1), (1A-2) or (1A-3): 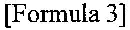 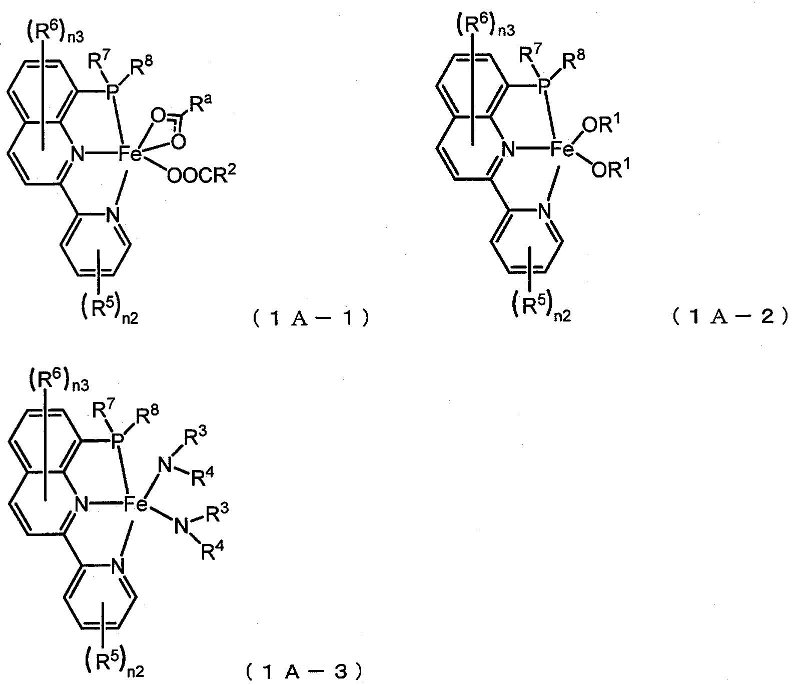 wherein R¹, R², R³, R⁴, R⁵, R⁶, R⁷, R⁸, R^{a}, n2 and n3 are as defined above.
[3] The iron complex compound according to [1] above, which is represented by formula (1B-1), (1B-2) or (1B-3): 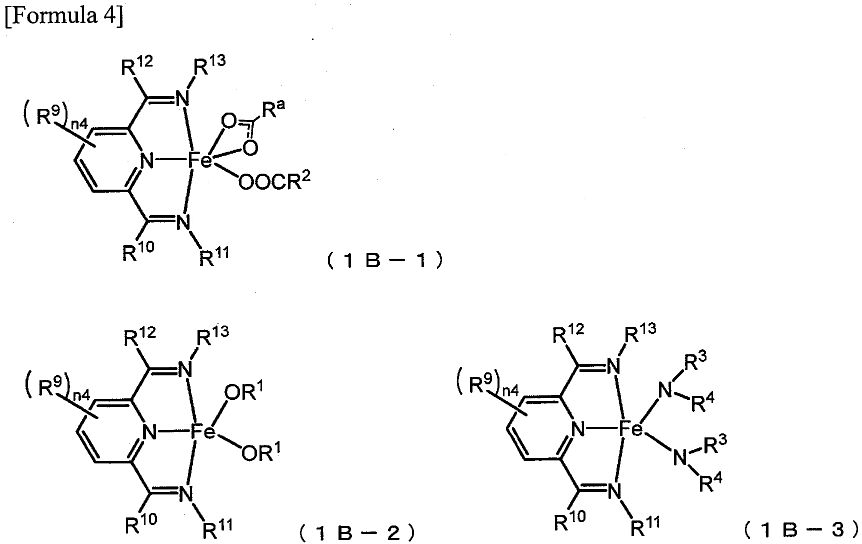 wherein R¹, R², R³, R⁴, R⁹, R¹⁰, R¹¹, R¹², R¹³, R^{a} and n4 are as defined above.
[4] A method for producing the iron complex compound according to [1] or [2] above, comprising reacting an iron compound represented by formula (1a-1): 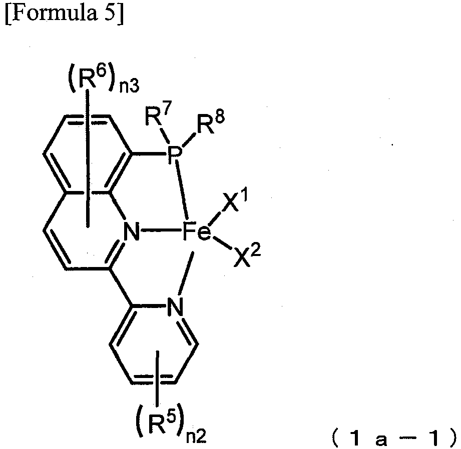 wherein
   X¹ and X² are each independently a halogen atom;
   R⁵ and R⁶ are each independently an optionally substituted aliphatic hydrocarbon group containing 1 to 6 carbon atoms, an optionally substituted aromatic hydrocarbon group containing 6 to 12 carbon atoms, or a halogen atom;
   R⁷ and R⁸ are each independently an optionally substituted aliphatic hydrocarbon group containing 1 to 12 carbon atoms, or an optionally substituted aromatic hydrocarbon group containing 6 to 12 carbon atoms, provided that when R⁷ and R⁸ are each an optionally substituted aliphatic hydrocarbon group containing 1 to 12 carbon atoms, R⁷ and R⁸ may be linked together to form a cyclic structure;
   n2 is an integer of 0 to 4, provided that R⁵ is attached to a carbon atom in the pyridine scaffold; and
   n3 is an integer of 0 to 5, provided that R⁶ is attached to a carbon atom in the quinoline scaffold, with a compound represented by:

      R¹OM, R²COOM, or NR³R⁴M (1a-2)

      wherein
   R¹, R², R³ and R⁴ are each independently an optionally substituted hydrocarbon group containing 13 to 24 carbon atoms, or -Si(CH₃)₂-[OSi(CH₃)₂]ₘ-CH₃, wherein m is an integer of 0 to 11; and
   each M is independently an alkali metal.
[5] A method for producing the iron complex compound according to [1] or [3] above, comprising reacting an iron compound represented by formula (1b-1): 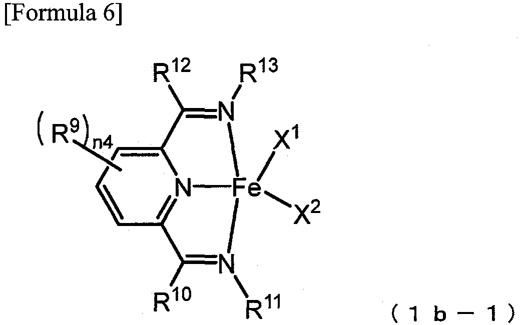 wherein
   X¹ and X² are each independently a halogen atom;
   each R⁹ is independently an optionally substituted aliphatic hydrocarbon group containing 1 to 6 carbon atoms, an optionally substituted aromatic hydrocarbon group containing 6 to 12 carbon atoms, or a halogen atom;
   R¹⁰, R¹¹, R¹² and R¹³ are each independently a hydrogen atom, an optionally substituted aliphatic hydrocarbon group containing 1 to 12 carbon atoms, or an optionally substituted aromatic hydrocarbon group containing 6 to 12 carbon atoms, provided that when R¹⁰ and R¹¹ are each an optionally substituted aliphatic hydrocarbon group containing 1 to 12 carbon atoms, R¹⁰ and R¹¹ may be linked together to form a cyclic structure, and when R¹² and R¹³ are each an optionally substituted aliphatic hydrocarbon group containing 1 to 12 carbon atoms, R¹² and R¹³ may be linked together to form a cyclic structure; and
   n4 is an integer of 0 to 3, provided that R⁹ is attached to a carbon atom in the pyridine scaffold,
      with a compound represented by:

      R¹OM, R²COOM, or NR³R⁴M (1b-2)

      wherein
      R¹, R², R³ and R⁴ are each independently an optionally substituted hydrocarbon group containing 13 to 24 carbon atoms, or -Si(CH₃)₂-[OSi(CH₃)₂]ₘ-CH₃, wherein m is an integer of 0 to 11; and
      each M is independently an alkali metal.
[6] A method for producing an organosilicon compound, comprising reacting an alkene with a hydrosilane in the presence of the iron complex compound according to [1], [2] or [3] above.

### Advantageous Effects of Invention

The iron complex compound of the present invention can be preferably used as a novel iron-based hydrosilylation catalyst in the organosilicon industry, particularly in the production of cured silicone materials and organosilicon compounds.

The iron complex compound of the present invention has high solubility in silicone, and is therefore particularly preferred for use in applications using silicone as a source material. According to a preferred aspect of the present invention, the iron complex compound of the present invention allows efficient production of organosilicon compounds and cured silicone materials.

### Description of Embodiments

The present invention will be further described in more detail below.

### 1. Iron complex compound

An iron complex compound according to one aspect of the present invention is represented by formula (1):

(L)FeAₙ₁ (1)

wherein L, A and n1 are as defined above.

The iron complex compound according to this aspect includes an iron complex compound wherein the ligand L is represented by formula (L-1) (first embodiment) and an iron complex compound wherein the ligand L is represented by formula (L-2) (second embodiment). Each embodiment will be described below.

### <First embodiment>

The iron complex compound according to the first embodiment is represented by the following formula:

(L¹)FeAₙ₁ (1A)

wherein
n1 is 2 or 3,
each A is independently -OR¹, -OC(=O)R², or -NR³R⁴;
R¹, R², R³ and R⁴ are each independently an optionally substituted hydrocarbon group containing 13 to 24 carbon atoms, or -Si(CH₃)₂-[OSi(CH₃)₂]ₘ-CH₃, wherein m is an integer of 0 to 11;
when two A are each -OR¹, wherein R¹ is an optionally substituted hydrocarbon group containing 13 to 24 carbon atoms, both R¹ may be linked together to form the cyclic structure -O-C(R^{a})-O-, wherein R^{a} is an optionally substituted hydrocarbon group containing 13 to 24 carbon atoms; and
L¹ represents a tridentate ligand of formula (L-1): 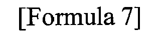 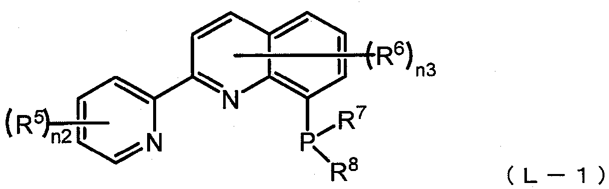 wherein
   R⁵ and R⁶ are each independently an optionally substituted aliphatic hydrocarbon group containing 1 to 6 carbon atoms, an optionally substituted aromatic hydrocarbon group containing 6 to 12 carbon atoms, or a halogen atom;
   R⁷ and R⁸ are each independently an optionally substituted aliphatic hydrocarbon group containing 1 to 12 carbon atoms, or an optionally substituted aromatic hydrocarbon group containing 6 to 12 carbon atoms, provided that when R⁷ and R⁸ are each an optionally substituted aliphatic hydrocarbon group containing 1 to 12 carbon atoms, R⁷ and R⁸ may be linked together to form a cyclic structure;
   n2 is an integer of 0 to 4, provided that R⁵ is attached to a carbon atom in the pyridine scaffold; and
   n3 is an integer of 0 to 5, provided that R⁶ is attached to a carbon atom in the quinoline scaffold.

In the formula, n1 is 2 or 3. When n1 is 2, the iron complex compound according to this embodiment has a coordination number of 5. When n1 is 3, the iron complex compound according to this embodiment has a coordination number of 6.

Each A is independently -OR¹, -OC(=O)R², or -NR³R⁴, wherein R¹, R², R³ and R⁴ are each independently an optionally substituted hydrocarbon group containing 13 to 24 carbon atoms, or -Si(CH₃)₂-[OSi(CH₃)₂]ₘ-CH₃, wherein m is an integer of 0 to 11.

The hydrocarbon group intended in R¹, R², R³ and R⁴ may be a saturated or unsaturated hydrocarbon group, and may be any of a linear hydrocarbon group, a cycloaliphatic hydrocarbon group or an aromatic hydrocarbon group. In the case of a linear hydrocarbon group, it may be either straight-chain or branched. In terms of solubility in silicone, preferred is a saturated or unsaturated linear hydrocarbon group, and more preferred is a straight-chain hydrocarbon group. Such a linear hydrocarbon group is preferably an alkyl group or an alkenyl group, and more preferably an alkyl group. The number of carbon atoms in the hydrocarbon group is 13 to 24, preferably 14 to 20, more preferably 16 to 20, and even more preferably 16 to 18. If the number of carbon atoms in the hydrocarbon group is within this range, its solubility in silicone can be increased.

Examples of such an alkyl group include a tridecyl group, a tetradecyl group, a pentadecyl group, a hexadecyl group, a heptadecyl group, an octadecyl group, a nonadecyl group, an icosyl group, an eicosyl group, a henicosyl group, a docosyl group, a tricosyl group, a tetracosyl group and so on. These groups may be either straight-chain or branched, but are preferably straight-chain.

Examples of such an alkenyl group include a tridecenyl group, a tetradecenyl group, a pentadecenyl group, a hexadecenyl group, a heptadecenyl group, an octadecenyl group, a nonadecynyl group, an icocenyl group, an eicocenyl group, a henicosenyl group, a docosenyl group, a tricosenyl group, a tetracosenyl group and so on. These groups each have a double bond at any position. Moreover, these groups may be either straight-chain or branched, but are preferably straight-chain.

The above hydrocarbon group may have a substituent at any position. If there are multiple substituents on the hydrocarbon group, they may be the same or different, or may be joined to each other to form a ring together with the atoms to which they are attached. Examples of substituents include a halogen atom, an optionally substituted amino group, an amido group, an alkoxyl group, a hydroxyl group, a carboxyl group, a carbonyl group, a silyl group and so on.

Examples of a halogen atom include fluorine, chlorine, bromine and iodine.

Examples of an alkoxyl group include an alkoxyl group containing 1 to 10 carbon atoms, as specifically exemplified by a methoxy group, an ethoxy group, a propoxy group, a butoxy group, a tert-butoxy group, etc.

Examples of an optionally substituted amino group include an amino group and a dialkylamino group containing 1 to 18 carbon atoms, as specifically exemplified by a dimethylamino group, a didodecylamino group, etc.

Moreover, -CH₂- contained in the above hydrocarbon group may be replaced with at least one bond selected from -O-, -S-, -SO₂-, -CO-, -COO-, -CONH- and -NH-.

R¹, R², R³ and R⁴ may each be -Si(CH₃)₂-[OSi(CH₃)₂]ₘ-CH₃, wherein m is an integer of 0 to 11, preferably 0 to 10, more preferably 0 to 4, and even more preferably 0 to 1.

For example, more preferred are -Si(CH₃)₃, -Si(CH₃)₂-[OSi(CH₃)₂]-CH₃, - Si(CH₃)₂-[OSi(CH₃)₂]₂-CH₃, -Si(CH₃)₂-[OSi(CH₃)₂]₃-CH₃, and -Si(CH₃)₂-[OSi(CH₃)₂]₄-CH₃.

A has an optionally substituted hydrocarbon group containing 13 to 24 carbon atoms or -Si(CH₃)₂-[OSi(CH₃)₂]ₘ-CH₃, whereby the solubility of the iron complex compound in silicone can be improved.

In one embodiment, R¹ and R² are each independently more preferably an optionally substituted hydrocarbon group containing 13 to 24 carbon atoms. Likewise, R³ and R⁴ are each independently more preferably -Si(CH₃)₂-[OSi(CH₃)₂]ₘ-CH₃.

It should be noted that when two A are each -OR¹, wherein R¹ is an optionally substituted hydrocarbon group containing 13 to 24 carbon atoms, both R¹ may be linked together to form the cyclic structure -O-C(R^{a})-O-, wherein R^{a} is an optionally substituted hydrocarbon group containing 13 to 24 carbon atoms. The hydrocarbon group intended in R^{a} and substituents which may be present on the hydrocarbon group are the same as the hydrocarbon group and the substituents, respectively, described for R¹, R², R³ and R⁴, and preferred examples thereof are also the same.

In the above formula (1A), L¹ represents a tridentate ligand of formula (L-1).

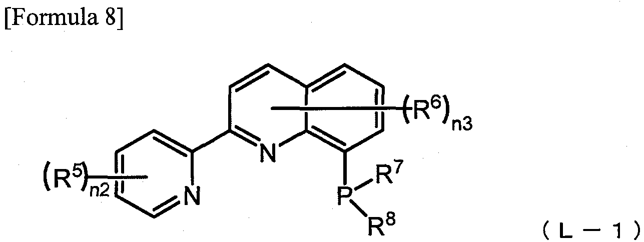

In the above formula (L-1), R⁵ and R⁶ each independently represent an optionally substituted aliphatic hydrocarbon group containing 1 to 6 carbon atoms, an optionally substituted aromatic hydrocarbon group containing 6 to 12 carbon atoms, or a halogen atom.

Examples of the halogen atom intended in R⁵ and R⁶ include a fluorine atom, a chlorine atom, a bromine atom, and an iodine atom.

The aliphatic hydrocarbon group intended in R⁵ and R⁶ may be a saturated or unsaturated aliphatic hydrocarbon group, and is preferably an alkyl group or an alkenyl group, and more preferably an alkyl group. Examples of an alkyl group include a methyl group, an ethyl group, an n-propyl group, an i-propyl group, an n-butyl group, a t-butyl group, a pentyl group, a hexyl group, a cyclohexyl group and so on.

Examples of a substituent which may be present on the aliphatic hydrocarbon group intended in R⁵ and R⁶ include a fluorine atom, a chlorine atom, a bromine atom, and an iodine atom.

The aromatic hydrocarbon group intended in R⁵ and R⁶ may be a monocyclic or polycyclic aromatic hydrocarbon group, and examples include a phenyl group, a 2,6-dimethylphenyl group, a 2,4-dimethylphenyl group, a 2,4,6-trimethylphenyl group, a 2,6-diisopropylphenyl group, a naphthyl group and so on.

Examples of a substituent which may be present on the aromatic hydrocarbon group intended in R⁵ and R⁶ include an aliphatic hydrocarbon group containing 1 to 6 carbon atoms, an aromatic hydrocarbon group, an alkoxyl group, a silyl group and a halogen atom, as specifically exemplified by an alkyl group containing 1 to 6 carbon atoms.

Specific examples of an aliphatic hydrocarbon group containing 1 to 6 carbon atoms, an aromatic hydrocarbon group and a halogen atom include those described above. Examples of an alkoxyl group include an alkoxyl group containing 1 to 10 carbon atoms, as specifically exemplified by a methoxy group, an ethoxy group, a propoxy group, a butoxy group, a tert-butoxy group, etc.

Examples of the optionally substituted aromatic hydrocarbon group intended in R⁵ and R⁶ include a phenyl group, a 2,6-dimethylphenyl group, a 2,4-dimethylphenyl group, a 2,4,6-trimethylphenyl group, a 2,6-diisopropylphenyl group, a naphthyl group and so on.

In the above formula (L-1), R⁷ and R⁸ each independently represent an optionally substituted aliphatic hydrocarbon group containing 1 to 12 carbon atoms, or an optionally substituted aromatic hydrocarbon group containing 6 to 12 carbon atoms.

The aliphatic hydrocarbon group intended in R⁷ and R⁸ may be a saturated or unsaturated aliphatic hydrocarbon group, and is preferably an alkyl group or an alkenyl group, and more preferably an alkyl group.

The alkyl group intended in R⁷ and R⁸ is not limited to straight-chain alkyl groups, and is intended to also include alkyl groups having a branched structure or a cyclic structure.

Examples of an optionally substituted alkyl group containing 1 to 12 carbon atoms include a methyl group, an ethyl group, an n-propyl group, an i-propyl group, an n-butyl group, a t-butyl group, a pentyl group, a hexyl group, a heptyl group, an octyl group, a nonyl group, a decyl group, a cyclohexyl group and so on.

Examples of a substituent which may be present on the aliphatic hydrocarbon group intended in R⁷ and R⁸ include a fluorine atom, a chlorine atom, a bromine atom, and an iodine atom.

It should be noted that when R⁷ and R⁸ are each an optionally substituted aliphatic hydrocarbon group containing 1 to 12 carbon atoms, R⁷ and R⁸ may be linked together to form a cyclic structure. For example, R⁷ and R⁸ may be linked together to form a phosphorane structure, a phosphinane structure, a phosphetane structure, etc.

The aromatic hydrocarbon group intended in R⁷ and R⁸ may be a monocyclic or polycyclic aromatic hydrocarbon group, and examples include a phenyl group, a naphthyl group and so on.

Examples of a substituent which may be present on the aromatic hydrocarbon group intended in R⁷ and R⁸ include an aliphatic hydrocarbon group containing 1 to 6 carbon atoms, an aromatic hydrocarbon group, an alkoxyl group, a silyl group, and a halogen atom, as specifically exemplified by an alkyl group containing 1 to 6 carbon atoms.

Specific examples of an aliphatic hydrocarbon group containing 1 to 6 carbon atoms, an aromatic hydrocarbon group, a halogen atom and an alkoxyl group include those described above.

Examples of the optionally substituted aromatic hydrocarbon group intended in R⁷ and R⁸ include a phenyl group, a 2,6-dimethylphenyl group, a 2,4-dimethylphenyl group, a 2,4,6-trimethylphenyl group, a 2,6-diisopropylphenyl group, a naphthyl group and so on.

In the above formula (L-1), n2 is an integer of 0 to 4, preferably an integer of 0 to 2, more preferably 0 or 1, and particularly preferably 0.

n3 is an integer of 0 to 5, preferably an integer of 0 to 3, more preferably an integer of 0 to 2, and particularly preferably 0 or 1.

R⁵ in the above formula (L-1) is attached to a carbon atom in the pyridine scaffold. In this regard, the state where R⁵ is attached to a carbon atom in the pyridine scaffold is intended to mean that R⁵ is attached to any of the carbon atoms constituting the pyridine ring.

In the above formula (L-1), when n2 is an integer of 2 to 4 and each R⁵ is an optionally substituted aliphatic hydrocarbon group containing 1 to 6 carbon atoms, the aliphatic hydrocarbon groups as R⁵ may be linked together to form a cyclic structure. For example, when n2 is 2, two R⁵ may be liked together to form a cycloheptane structure, a cycloheptene structure, a cyclohexane structure, a cyclohexene structure, etc.

R⁶ in the above formula (L-1) is attached to a carbon atom in the quinoline scaffold. In this regard, the state where R⁶ is attached to a carbon atom in the quinoline scaffold is intended to mean that R⁶ is attached to any of the carbon atoms constituting the quinoline ring.

In the above formula (L-1), when n3 is an integer of 2 to 5 and each R⁶ is an optionally substituted aliphatic hydrocarbon group containing 1 to 6 carbon atoms, the hydrocarbon groups as R⁶ may be linked together to form a cyclic structure. For example, when n3 is 2, two R⁶ may be linked together to form a cycloheptane structure, a cycloheptene structure, a cyclohexane structure, a cyclohexene structure, etc.

The iron complex compound of the first embodiment is more specifically exemplified by a compound represented by the following formula (1A-1), (1A-2) or (1A-3): 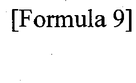 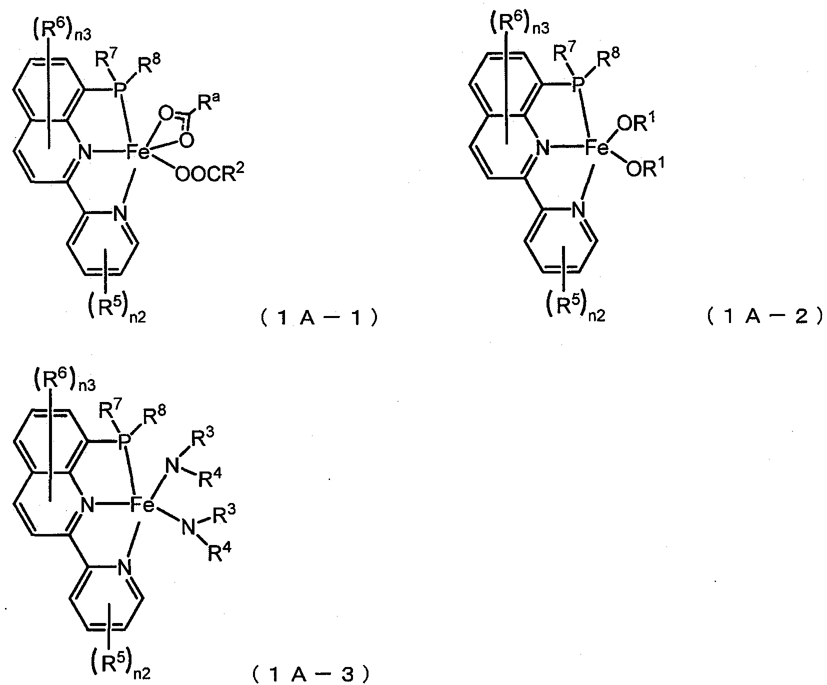 wherein R¹, R², R³, R⁴, R⁵, R⁶, R⁷, R⁸, R^{a}, n2 and n3 are as defined above.

Among these iron complex compounds, particularly preferred iron complex compounds are exemplified by the compounds shown below: 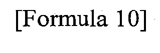 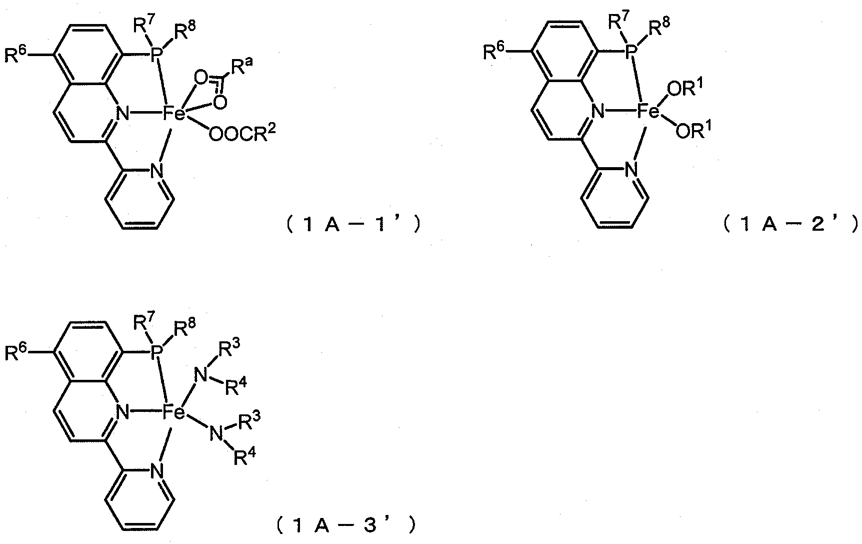 wherein R¹, R², R³, R⁴, R⁶, R⁷, R⁸ and R^{a} are as defined above.

Above all, in the above formula (1A-1'), R^{a} is preferably an optionally substituted saturated or unsaturated linear hydrocarbon group containing 13 to 24 carbon atoms, and more preferably an optionally substituted alkyl or alkenyl group containing 13 to 24 carbon atoms. In the case of a linear hydrocarbon group, it may be either straight-chain or branched, but is preferably straight-chain. Likewise, R² is preferably an optionally substituted hydrocarbon group containing 13 to 24 carbon atoms, more preferably an optionally substituted saturated or unsaturated linear hydrocarbon group containing 13 to 24 carbon atoms, and even more preferably an optionally substituted alkyl or alkenyl group containing 13 to 24 carbon atoms. In the case of a linear hydrocarbon group, it may be either straight-chain or branched, but is preferably straight-chain.

Likewise, in the above formula (1A-2'), each R¹ is independently preferably an optionally substituted saturated or unsaturated linear hydrocarbon group containing 13 to 24 carbon atoms, and more preferably an optionally substituted alkyl or alkenyl group containing 13 to 24 carbon atoms. In the case of a linear hydrocarbon group, it may be either straight-chain or branched, but is preferably straight-chain.

Alternatively, each R¹ is independently preferably -Si(CH₃)₂-[OSi(CH₃)₂]ₘ-CH₃, wherein m is an integer of 0 to 11, preferably 0 to 10, more preferably 0 to 4, and even more preferably 0 to 1. For example, R¹ is more preferably -Si(CH₃)₃, -Si(CH₃)₂-[OSi(CH₃)₂]-CH₃, -Si(CH₃)₂-[OSi(CH₃)₂]₂-CH₃, -Si(CH₃)₂-[OSi(CH₃)₂]₃-CH₃, or - Si(CH₃)₂-[OSi(CH₃)₂]₄-CH₃.

Likewise, in the above formula (1A-3'), R³ and R⁴ are each independently preferably an optionally substituted saturated or unsaturated linear hydrocarbon group containing 13 to 24 carbon atoms, and more preferably an optionally substituted alkyl or alkenyl group containing 13 to 24 carbon atoms. In the case of a linear hydrocarbon group, it may be either straight-chain or branched, but is preferably straight-chain.

Alternatively, R³ and R⁴ are each independently preferably -Si(CH₃)₂-[OSi(CH₃)₂]ₘ-CH₃, wherein m is an integer of 0 to 11, preferably 0 to 10, more preferably 0 to 4, and even more preferably 0 to 1. For example, R³ and R⁴ are each more preferably -Si(CH₃)₃, -Si(CH₃)₂-[OSi(CH₃)₂]-CH₃, -Si(CH₃)₂-[OSi(CH₃)₂]₂-CH₃, -Si(CH₃)₂-[OSi(CH₃)₂]₃-CH₃, or -Si(CH₃)₂-[OSi(CH₃)₂]₄-CH₃.

### <Second embodiment>

The iron complex compound according to the second embodiment is represented by the following formula:

(L²)FeAₙ₁ (1B)

wherein
n1 is 2 or 3,
each A is independently -OR¹, -OC(=O)R², or -NR³R⁴;
R¹, R², R³ and R⁴ are each independently an optionally substituted hydrocarbon group containing 13 to 24 carbon atoms, or -Si(CH₃)₂-[OSi(CH₃)₂]ₘ-CH₃, wherein m is an integer of 0 to 11;
when two A are each -OR¹, wherein R¹ is an optionally substituted hydrocarbon group containing 13 to 24 carbon atoms, both R¹ may be linked together to form the cyclic structure -O-C(R^{a})-O-, wherein R^{a} is an optionally substituted hydrocarbon group containing 13 to 24 carbon atoms; and
L² represents a tridentate ligand of formula (L-2): 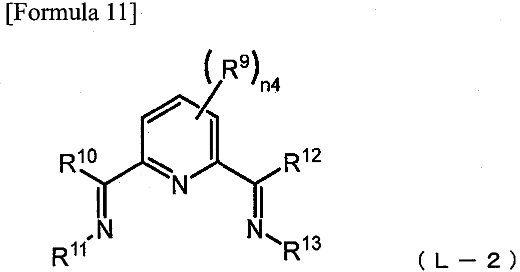 wherein
   each R⁹ is independently an optionally substituted aliphatic hydrocarbon group containing 1 to 6 carbon atoms, an optionally substituted aromatic hydrocarbon group containing 6 to 12 carbon atoms, or a halogen atom;
   R¹⁰, R¹¹, R¹² and R¹³ are each independently a hydrogen atom, an optionally substituted aliphatic hydrocarbon group containing 1 to 12 carbon atoms, or an optionally substituted aromatic hydrocarbon group containing 6 to 12 carbon atoms, provided that when R¹⁰ and R¹¹ are each an optionally substituted aliphatic hydrocarbon group containing 1 to 12 carbon atoms, R¹⁰ and R¹¹ may be linked together to form a cyclic structure, and when R¹² and R¹³ are each an optionally substituted aliphatic hydrocarbon group containing 1 to 12 carbon atoms, R¹² and R¹³ may be linked together to form a cyclic structure; and
   n4 is an integer of 0 to 3, provided that R⁹ is attached to a carbon atom in the pyridine scaffold.

In the formula, n1, A, R¹, R², R³, R⁴ and R^{a} are the same as n1, A, R¹, R², R³, R⁴ and R^{a}, respectively, in the first embodiment, and preferred examples thereof are also the same.

In the above formula (1B), L² represents a tridentate ligand of formula (L-2).

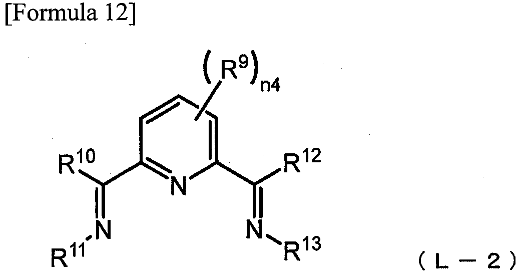

In the above formula (L-2), n4 is an integer of 0 to 3, preferably 0 or 1, and particularly preferably 0.

In the above formula (L-2), each R⁹ independently represents an optionally substituted aliphatic hydrocarbon group containing 1 to 6 carbon atoms, an optionally substituted aromatic hydrocarbon group containing 6 to 12 carbon atoms, or a halogen atom.

Examples of the optionally substituted aliphatic hydrocarbon group containing 1 to 6 carbon atoms, the optionally substituted aromatic hydrocarbon group containing 6 to 12 carbon atoms, or the halogen atom intended in R⁹ include the same groups as illustrated for R⁵ and R⁶ in the above formula (L-1).

R⁹ in the above formula (L-2) is attached to a carbon atom in the pyridine scaffold. In this regard, the state where R⁹ is attached to a carbon atom in the pyridine scaffold is intended to mean that R⁹ is attached to any of the carbon atoms constituting the pyridine ring.

In the above formula (L-2), when n4 is 2 or 3 and each R⁹ is an optionally substituted aliphatic hydrocarbon group containing 1 to 6 carbon atoms, the aliphatic hydrocarbon groups as R⁹ may be linked together to form a cyclic structure. For example, when n4 is 2, two R⁹ may be linked together to form a cycloheptane structure, a cycloheptene structure, a cyclohexane structure, a cyclohexene structure, etc.

In the above formula (L-2), R¹⁰, R¹¹, R¹² and R¹³ each independently represent a hydrogen atom, an optionally substituted aliphatic hydrocarbon group containing 1 to 12 carbon atoms, or an optionally substituted aromatic hydrocarbon group containing 6 to 12 carbon atoms.

Examples of the optionally substituted aliphatic hydrocarbon group containing 1 to 12 carbon atoms, and the optionally substituted aromatic hydrocarbon group containing 6 to 12 carbon atoms intended in R¹⁰, R¹¹, R¹² and R¹³ include the same groups as illustrated for R⁷ and R⁸ in the above formula (L-1).

R¹⁰ and R¹² are each independently preferably a hydrogen atom, or an optionally substituted aliphatic hydrocarbon group containing 1 to 12 carbon atoms, more preferably an alkyl or alkenyl group containing 1 to 6 carbon atoms, and even more preferably an alkyl group containing 1 to 6 carbon atoms.

R¹¹ and R¹³ are each independently preferably a hydrogen atom, or an optionally substituted aromatic hydrocarbon group containing 6 to 12 carbon atoms, and more preferably an aromatic hydrocarbon group containing 6 to 12 carbon atoms.

It should be noted that when R¹⁰ and R¹¹ are each an optionally substituted aliphatic hydrocarbon group containing 1 to 12 carbon atoms, R¹⁰ and R¹¹ may be linked together to form a cyclic structure, and when R¹² and R¹³ are each an optionally substituted aliphatic hydrocarbon group containing 1 to 12 carbon atoms, R¹² and R¹³ may be linked together to form a cyclic structure. For example, R¹⁰ and R¹¹ as well as R¹² and R¹³ may be individually linked together to form a pyrrole structure, a pyridine structure, etc.

The iron complex compound of the second embodiment is exemplified, for example, by a compound represented by the following formula (1B-1), (1B-2) or (1B-3): 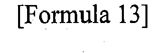 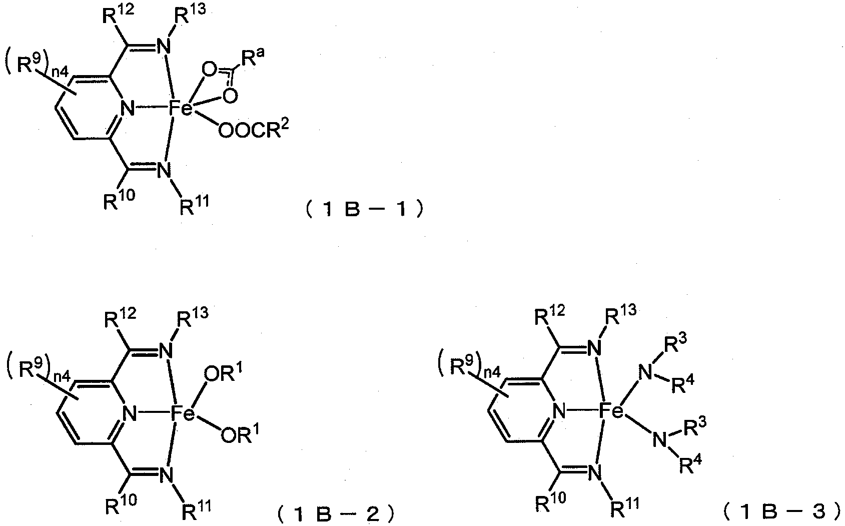 wherein R¹, R², R³, R⁴, R⁹, R¹⁰, R¹¹, R¹², R¹³, R^{a} and n4 are as defined above.

Among these iron complex compounds, particularly preferred iron complex compounds are exemplified by the compounds shown below: 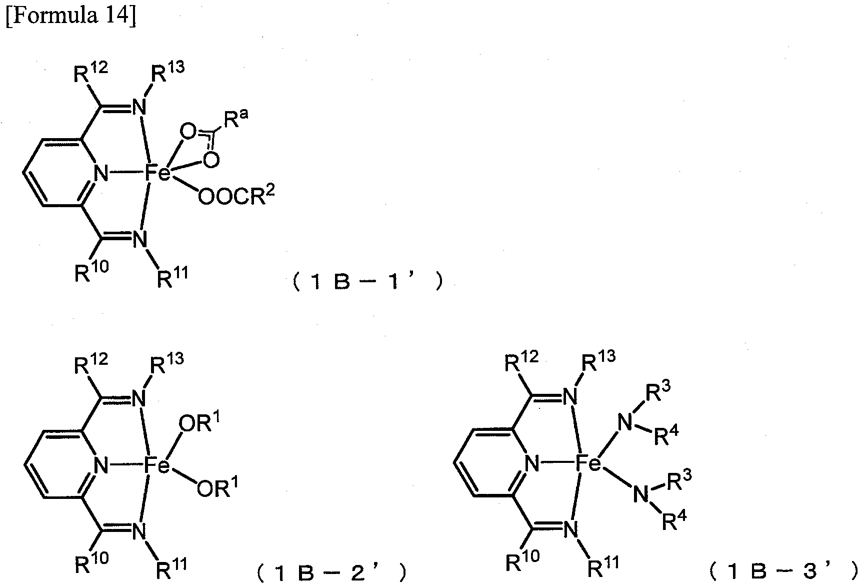 wherein R¹, R², R³, R⁴, R¹⁰, R¹¹, R¹², R¹³ and R^{a} are as defined above.

Above all, in the above formula (1B-1'), R^{a} is preferably an optionally substituted saturated or unsaturated linear hydrocarbon group containing 13 to 24 carbon atoms, and more preferably an optionally substituted alkyl or alkenyl group containing 13 to 24 carbon atoms. In the case of a linear hydrocarbon group, it may be either straight-chain or branched, but is preferably straight-chain. Likewise, R² is preferably an optionally substituted hydrocarbon group containing 13 to 24 carbon atoms, more preferably an optionally substituted saturated or unsaturated linear hydrocarbon group containing 13 to 24 carbon atoms, and even more preferably an optionally substituted alkyl or alkenyl group containing 13 to 24 carbon atoms. In the case of a linear hydrocarbon group, it may be either straight-chain or branched, but is preferably straight-chain.

R¹⁰ and R¹² are each independently preferably a hydrogen atom, or an optionally substituted aliphatic hydrocarbon group containing 1 to 12 carbon atoms, more preferably an alkyl or alkenyl group containing 1 to 6 carbon atoms, and even more preferably an alkyl group containing 1 to 6 carbon atoms.

R¹¹ and R¹³ are each independently preferably a hydrogen atom, or an optionally substituted aromatic hydrocarbon group containing 6 to 12 carbon atoms, and more preferably an aromatic hydrocarbon group containing 6 to 12 carbon atoms.

Likewise, in the above formula (1B-2'), each R¹ is independently preferably an optionally substituted saturated or unsaturated linear hydrocarbon group containing 13 to 24 carbon atoms, and more preferably an optionally substituted alkyl or alkenyl group containing 13 to 24 carbon atoms. In the case of a linear hydrocarbon group, it may be either straight-chain or branched, but is preferably straight-chain.

Alternatively, each R¹ is independently preferably -Si(CH₃)₂-[OSi(CH₃)₂]ₘ-CH₃, wherein m is an integer of 0 to 11, preferably 0 to 10, more preferably 0 to 4, and even more preferably 0 to 1. For example, R¹ is more preferably -Si(CH₃)₃, -Si(CH₃)₂-[OSi(CH₃)₂]-CH₃, -Si(CH₃)₂-[OSi(CH₃)₂]₂-CH₃, -Si(CH₃)₂-[OSi(CH₃)₂]₃-CH₃, or - Si(CH₃)₂-[OSi(CH₃)₂]₄-CH₃.

R¹⁰ and R¹² are each independently preferably a hydrogen atom, or an optionally substituted aliphatic hydrocarbon group containing 1 to 12 carbon atoms, more preferably an alkyl or alkenyl group containing 1 to 6 carbon atoms, and even more preferably an alkyl group containing 1 to 6 carbon atoms.

R¹¹ and R¹³ are each independently preferably a hydrogen atom, or an optionally substituted aromatic hydrocarbon group containing 6 to 12 carbon atoms, and more preferably an aromatic hydrocarbon group containing 6 to 12 carbon atoms.

Likewise, in the above formula (1B-3'), R³ and R⁴ are each independently preferably an optionally substituted saturated or unsaturated linear hydrocarbon group containing 13 to 24 carbon atoms, and more preferably an optionally substituted alkyl or alkenyl group containing 13 to 24 carbon atoms. In the case of a linear hydrocarbon group, it may be either straight-chain or branched, but is preferably straight-chain. Alternatively, R³ and R⁴ are each independently preferably -Si(CH₃)₂-[OSi(CH₃)₂]ₘ-CH₃, wherein m is an integer of 0 to 11, preferably 0 to 10, more preferably 0 to 4, and even more preferably 0 to 1. For example, R³ and R⁴ are each more preferably -Si(CH₃)₃, -Si(CH₃)₂-[OSi(CH₃)₂]-CH₃, -Si(CH₃)₂-[OSi(CH₃)₂]₂-CH₃, -Si(CH₃)₂-[OSi(CH₃)₂]₃-CH₃, or -Si(CH₃)₂-[OSi(CH₃)₂]₄-CH₃.

R¹⁰ and R¹² are each independently preferably a hydrogen atom, or an optionally substituted aliphatic hydrocarbon group containing 1 to 12 carbon atoms, more preferably an alkyl or alkenyl group containing 1 to 6 carbon atoms, and even more preferably an alkyl group containing 1 to 6 carbon atoms.

R¹¹ and R¹³ are each independently preferably a hydrogen atom, or an optionally substituted aromatic hydrocarbon group containing 6 to 12 carbon atoms, and more preferably an aromatic hydrocarbon group containing 6 to 12 carbon atoms.

### 2. Production method for iron complex compound

A production method for an iron complex compound according to one aspect of the present invention includes a production method for an iron complex compound with a tridentate ligand represented by formula (L-1) (first embodiment) and a production method for an iron complex compound with a tridentate ligand represented by formula (L-2) (second embodiment). Each embodiment will be described below.

### <First embodiment>

A production method for an iron complex compound according to the first embodiment is a production method for an iron complex compound represented by the above formula (1A), which comprises reacting an iron compound represented by formula (1a-1): 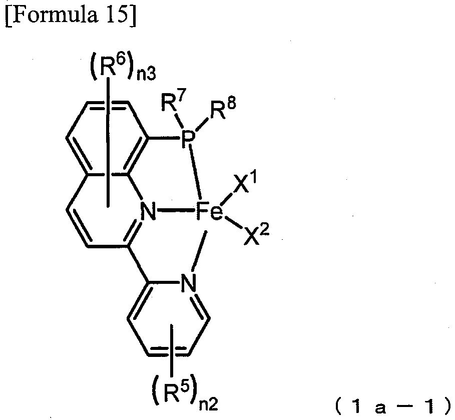 wherein
X¹ and X² are each independently a halogen atom;
R⁵ and R⁶ are each independently an optionally substituted aliphatic hydrocarbon group containing 1 to 6 carbon atoms, an optionally substituted aromatic hydrocarbon group containing 6 to 12 carbon atoms, or a halogen atom;
R⁷ and R⁸ are each independently an optionally substituted aliphatic hydrocarbon group containing 1 to 12 carbon atoms, or an optionally substituted aromatic hydrocarbon group containing 6 to 12 carbon atoms, provided that when R⁷ and R⁸ are each an optionally substituted aliphatic hydrocarbon group containing 1 to 12 carbon atoms, R⁷ and R⁸ may be linked together to form a cyclic structure;
n2 is an integer of 0 to 4, provided that R⁵ is attached to a carbon atom in the pyridine scaffold; and
n3 is an integer of 0 to 5, provided that R⁶ is attached to a carbon atom in the quinoline scaffold,
with a compound represented by:

R¹OM, R²COOM, or NR³R⁴M (1a-2)

wherein
R¹, R², R³ and R⁴ are each independently an optionally substituted hydrocarbon group containing 13 to 24 carbon atoms, or -Si(CH₃)₂-[OSi(CH₃)₂]ₘ-CH₃, wherein m is an integer of 0 to 11; and
each M is independently an alkali metal.

In formula (1a-1), X¹ and X² are each independently a halogen atom. Examples of a halogen atom include a fluorine atom, a chlorine atom, a bromine atom, and an iodine atom, with a chlorine atom or a bromine atom being preferred, and with a chlorine atom being more preferred.

In formula (1a-1), R⁵, R⁶, R⁷, R⁸, n2 and n3 are the same as R⁵, R⁶, R⁷, R⁸, n2 and n3, respectively, in the above formula (L-1), and preferred examples thereof are also the same.

The compound represented by formula (1a-1) may be produced by reference to the methods described in, for example, Kamitani, M.; Kusaka, H.; Toriyabe, T.; Yuge, H., Bull. Chem. Soc. Jpn., 2018, 91, 1429-1435. (Non-patent Literature 3) and Britovsek, G. J. P.; Gibson, V. C.; McTavish, S. J.; Solan, G. A.; White, A. J. P.; Williams, D. J.; Britovsek, G. J. P.; Kimberley, B. S.; Maddox, P. J. Chem. Commun. 1998, 849-850. (Non-patent Literature 4).

In more detail, a tridentate ligand represented by the above formula (L-1) is first produced in accordance with the methods described in Non-patent Literature 3 and Non-patent Literature 4, and the resulting tridentate ligand is reacted with an iron(II) halide represented by the formula: FeX¹X² (wherein X¹ and X² are the same as X¹ and X² in the above formula (1a-1)), whereby the compound represented by the above formula (1a-1) can be produced.

The reaction between the tridentate ligand and the iron(II) halide may be conducted in the presence or absence of a solvent, but is preferably conducted in the presence of a solvent because the reaction is allowed to proceed uniformly. The type of solvent is not limited in any way, and examples include hydrocarbon solvents such as hexane, heptane, octane, decane, dodecane, cyclohexane, methylcyclohexane, benzene, toluene, etc.; and ether solvents such as diethyl ether, 1,4-dioxane, tetrahydrofuran (THF), cyclopentyl methyl ether, etc. Among these solvents, preferred are tetrahydrofuran (THF), hexane, benzene, toluene, etc., and more preferred is tetrahydrofuran. One of these solvents may be used alone, or two or more of these solvents may be used in combination.

The reaction temperature is, for example, preferably 0°C to 80°C, more preferably 10°C to 40°C, and even more preferably the reaction is conducted at room temperature. The reaction time is, for example, preferably 1 to 48 hours, and more preferably 4 to 20 hours.

The above reaction may be conducted under an air atmosphere or under an inert atmosphere such as nitrogen or argon, but is preferably conducted under an inert atmosphere such as nitrogen or argon.

After completion of the reaction, the generated solid may be separated by filtration and washed with a solvent, and then dried under vacuum to thereby obtain the desired product, i.e., the iron compound represented by the above formula (1a-1). Examples of a solvent for use in washing include the same solvents as illustrated for the reaction solvent.

In the first embodiment, the iron compound represented by the above formula (1a-1) and the compound represented by the above formula (1a-2) may be reacted with each other to thereby produce the desired product, i.e., the iron complex compound represented by formula (1A).

In the above formula (1a-2), R¹, R², R³ and R⁴ are the same as R¹, R², R³ and R⁴, respectively, in formula (1A) in "1. Iron complex compound" above, and preferred examples thereof are also the same.

In the above formula (1a-2), each M is independently an alkali metal. Examples of an alkali metal include lithium, sodium, potassium and so on, with sodium or potassium being preferred.

The compound represented by the above formula (1a-2) is commonly known and may be easily obtained as a commercially available product or by using known synthesis procedures.

The reaction between the iron compound represented by formula (1a-1) and the compound represented by formula (1a-2) may be conducted in the presence or absence of a solvent, but is preferably conducted in the presence of a solvent because the reaction is allowed to proceed uniformly. The type of solvent is not limited in any way, and examples include hydrocarbon solvents such as hexane, heptane, octane, decane, dodecane, cyclohexane, methylcyclohexane, benzene, toluene, etc.; and ether solvents such as diethyl ether, 1,4-dioxane, tetrahydrofuran, cyclopentyl methyl ether, etc. Among these solvents, preferred are tetrahydrofuran, hexane, benzene, toluene, diethyl ether, etc., and more preferred are tetrahydrofuran and diethyl ether.

One of these solvents may be used alone, or two or more of these solvents may be used in combination.

For example, when the compound represented by formula (1a-2) has an optionally substituted hydrocarbon group containing 13 to 24 carbon atoms, solvents preferred for use are tetrahydrofuran, diethyl ether, benzene and toluene.

Alternatively, for example, when the compound represented by formula (1a-2) has -Si(CH₃)₂-[OSi(CH₃)₂]ₘ-CH₃, solvents preferred for use are diethyl ether, benzene and toluene.

The temperature of the reaction between the iron compound represented by the above formula (1a-1) and the compound represented by formula (1a-2) is, for example, preferably 0°C to 80°C, and more preferably 20°C to 60°C. The reaction time is, for example, preferably 1 to 48 hours, and more preferably 4 to 20 hours.

The above reaction may be conducted under an air atmosphere or under an inert atmosphere such as nitrogen or argon, but is preferably conducted under an inert atmosphere such as nitrogen or argon.

After completion of the reaction, the reaction mixture may be filtered to remove insoluble matter, and then dried under vacuum to thereby obtain the desired product, i.e., the iron complex compound represented by the above formula (1A). The resulting compound may be purified in a standard manner. For example, the resulting compound may be dissolved in an appropriate solvent and then filtered, and the filtrate may be dried under vacuum or recrystallized for purification. Examples of a solvent for use in purification include the same solvents as illustrated for the reaction solvent.

The iron complex compound represented by the above formula (1A) may have stereoisomers depending on the coordination mode or conformation of the ligand. The iron complex compound represented by the above formula (1A) may be a mixture of these stereoisomers or may be a pure single isomer.

### <Second embodiment>

A production method for an iron complex compound according to the second embodiment is a production method for an iron complex compound represented by the above formula (1B), which comprises reacting an iron compound represented by formula (1b-1): 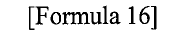 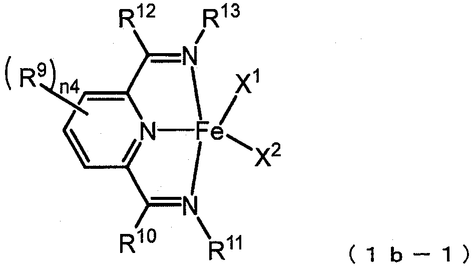 wherein
X¹ and X² are each independently a halogen atom;
each R⁹ is independently an optionally substituted aliphatic hydrocarbon group containing 1 to 6 carbon atoms, an optionally substituted aromatic hydrocarbon group containing 6 to 12 carbon atoms, or a halogen atom;
R¹⁰, R¹¹, R¹² and R¹³ are each independently a hydrogen atom, an optionally substituted aliphatic hydrocarbon group containing 1 to 12 carbon atoms, or an optionally substituted aromatic hydrocarbon group containing 6 to 12 carbon atoms, provided that when R¹⁰ and R¹¹ are each an optionally substituted aliphatic hydrocarbon group containing 1 to 12 carbon atoms, R¹⁰ and R¹¹ may be linked together to form a cyclic structure, and when R¹² and R¹³ are each an optionally substituted aliphatic hydrocarbon group containing 1 to 12 carbon atoms, R¹² and R¹³ may be linked together to form a cyclic structure; and
n4 is an integer of 0 to 3, provided that R⁹ is attached to a carbon atom in the pyridine scaffold,
   with a compound represented by:

   R¹OM, R²COOM, or NR³R⁴M (1b-2)

   wherein
   R¹, R², R³ and R⁴ are each independently an optionally substituted hydrocarbon group containing 13 to 24 carbon atoms, or -Si(CH₃)₂-[OSi(CH₃)₂]ₘ-CH₃, wherein m is an integer of 0 to 11; and
   each M is independently an alkali metal.

The production method for an iron complex compound according to the second embodiment is the same as in the first embodiment, except that the iron compound represented by the above formula (1b-1) is used as an iron compound.

In the above formula (1b-1), X¹ and X² are each independently a halogen atom. Examples of a halogen atom include a fluorine atom, a chlorine atom, a bromine atom, and an iodine atom, with a chlorine atom or a bromine atom being preferred, and with a chlorine atom being more preferred.

In the above formula (1b-1), R⁹, R¹⁰, R¹¹, R¹², R¹³ and n4 are the same as R⁹, R¹⁰, R¹¹, R¹², R¹³ and n4, respectively, in the above formula (L-2), and preferred examples thereof are also the same.

As in the case of the compound represented by the above formula (1a-1), the compound represented by the above formula (1b-1) may be produced by reference to the methods described in, for example, Kamitani, M.; Kusaka, H.; Toriyabe, T.; Yuge, H., Bull. Chem. Soc. Jpn., 2018, 91, 1429-1435. (Non-patent Literature 3) and Britovsek, G. J. P.; Gibson, V. C.; McTavish, S. J.; Solan, G. A.; White, A. J. P.; Williams, D. J.; Britovsek, G. J. P.; Kimberley, B. S.; Maddox, P. J. Chem. Commun. 1998, 849-850. (Non-patent Literature 4).

In more detail, a tridentate ligand represented by the above formula (L-2) is first produced in accordance with the methods described in Non-patent Literature 3 and Non-patent Literature 4, and the resulting tridentate ligand is reacted with an iron(II) halide represented by the formula: FeX¹X² (wherein X¹ and X² are the same as X¹ and X² in the above formula (1b-1)), whereby the compound represented by the above formula (1b-1) can be produced.

The reaction between the tridentate ligand and the iron(II) halide may be conducted in the presence or absence of a solvent, but is preferably conducted in the presence of a solvent because the reaction is allowed to proceed uniformly. The type of solvent is not limited in any way, and examples include the same solvents as illustrated in the first embodiment. One of these solvents may be used alone, or two or more of these solvents may be used in combination.

The reaction temperature is, for example, preferably 0°C to 80°C, more preferably 10°C to 40°C, and even more preferably the reaction is conducted at room temperature. The reaction time is, for example, preferably 12 to 48 hours, and more preferably 16 to 20 hours.

The above reaction may be conducted under an air atmosphere or under an inert atmosphere such as nitrogen or argon, but is preferably conducted under an inert atmosphere such as nitrogen or argon.

After completion of the reaction, the generated solid may be separated by filtration and washed with a solvent, and then dried under vacuum to thereby obtain the desired product, i.e., the compound represented by the above formula (1b-1). Examples of a solvent for use in washing include the same solvents as illustrated for the reaction solvent.

In the second embodiment, the iron compound represented by the above formula (1b-1) and the compound represented by the above formula (1b-2) may be reacted with each other to thereby produce the desired product, i.e., the iron complex compound.

In the above formula (1b-2), R¹, R², R³ and R⁴ are the same as R¹, R², R³ and R⁴, respectively, in formula (1B) in "1. Iron complex compound" above, and preferred examples thereof are also the same.

In formula (1b-2), each M is independently an alkali metal. Examples of an alkali metal include lithium, sodium, potassium and so on, with sodium or potassium being preferred.

The compound represented by the above formula (1b-2) may be the same as the compound represented by the above formula (1a-2), and may be easily obtained as a commercially available product or by using known synthesis procedures.

The reaction between the iron compound represented by formula (1b-1) and the compound represented by formula (1b-2) may be conducted in the presence or absence of a solvent, but is preferably conducted in the presence of a solvent because the reaction is allowed to proceed uniformly. The type of solvent is not limited in any way, and examples include the same solvents as illustrated in the first embodiment. One of these solvents may be used alone, or two or more of these solvents may be used in combination.

For example, when the compound represented by formula (1b-2) has an optionally substituted hydrocarbon group containing 13 to 24 carbon atoms, solvents preferred for use are tetrahydrofuran, diethyl ether, benzene and toluene.

Alternatively, for example, when the compound represented by formula (1b-2) has -Si(CH₃)₂-[OSi(CH₃)₂]ₘ-CH₃, solvents preferred for use are diethyl ether, benzene and toluene.

The temperature of the reaction between the iron compound represented by the above formula (1b-1) and the compound represented by the above formula (1b-2) is, for example, preferably 0°C to 80°C, and more preferably 20°C to 80°C. The reaction time is, for example, preferably 1 to 48 hours, and more preferably 4 to 20 hours.

The above reaction may be conducted under an air atmosphere or under an inert atmosphere such as nitrogen or argon, but is preferably conducted under an inert atmosphere such as nitrogen or argon.

After completion of the reaction, the reaction mixture may be filtered to remove insoluble matter, and then dried under vacuum to thereby obtain the desired product, i.e., the compound represented by the above formula (1B). The resulting compound may be purified in a standard manner. For example, the resulting compound may be dissolved in an appropriate solvent and then filtered, and the filtrate may be dried under vacuum or recrystallized for purification. Examples of a solvent for use in purification include the same solvents as illustrated for the reaction solvent.

The compound represented by the above formula (1B) may have stereoisomers depending on the coordination mode or conformation of the ligand. The compound represented by the above formula (1B) may be a mixture of these stereoisomers or may be a pure single isomer.

### 3. Production method for organosilicon compound

A production method for an organosilicon compound according to one aspect of the present invention comprises reacting an alkene with a hydrosilane in the presence of the iron complex compound described above. According to this aspect, the above iron complex compound cleaves a silicon-hydrogen bond(s) in a hydrosilane, and catalyzes addition reaction to a carbon-carbon unsaturated bond(s) in an alkene, whereby an organosilicon compound can be produced. It should be noted that the organosilicon compound intended herein refers to a compound containing one or more bonds formed between silicon and carbon atoms.

The above iron complex compound and the production method thereof are as described in "1. Iron complex compound" above and "2. Production method for iron complex compound" above, respectively.

The amount of the above iron complex compound to be used is not limited in any way, and may be selected as appropriate depending on the intended purpose. The amount of the above iron complex compound to be used is, for example, preferably 0.000001 equivalents or more, more preferably 0.00001 equivalents or more, and even more preferably 0.0001 equivalents or more, relative to 1 equivalent of a hydrosilane serving as a substrate. Moreover, the amount of the iron complex compound to be used is preferably 0.1 equivalents or less, more preferably 0.01 equivalents or less, and even more preferably 0.001 equivalents or less. Alternatively, the amount of the iron complex compound to be used is preferably 0.0001 mol% or more, more preferably 0.001 mol% or more, and even more preferably 0.01 mol% or more, and is preferably 10 mol% or less, more preferably 1 mol% or less, and even more preferably 0.1 mol% or less, relative to a hydrosilane serving as a substrate. When used within the above range, the iron complex compound not only achieves a sufficient reaction rate, but also allows easy purification, whereby an organosilicon compound can be produced efficiently. It should be noted that the above iron complex compound may be used alone, or two or more iron complex compounds may be used in combination. When two or more iron complex compounds are used in combination, their total amount is preferably within the above range.

In this aspect, an alkene is not limited in any way as long as it is a compound having at least one carbon-carbon double bond within its molecule. Examples of such an alkene include olefin compounds, silane compounds or organopolysiloxane compounds, etc., each having at least one carbon-carbon double bond within their molecule.

Likewise, a hydrosilane is not limited in any way as long as it is a compound having at least one Si-H bond within its molecule. Examples of such a hydrosilane include silane compounds or organopolysiloxane compounds, etc., each having at least one Si-H bond within their molecule.

With regard to the above alkene and the above hydrosilane, the structure of each compound is not limited in any way, and compounds of any structure may be used in any combination. The organosilicon compound obtained by the reaction between the above alkene and the above hydrosilane is also not limited in any way as to its structure and molecular weight, etc.

The temperature and time suitable for the reaction may be selected as appropriate by those skilled in the art, depending on the above alkene and the above hydrosilane and their combination, the intended purpose of use, etc.

The reaction may be conducted under an air atmosphere or under an inert atmosphere such as nitrogen or argon, but is preferably conducted under an inert atmosphere such as nitrogen or argon.

The production method for an organosilicon compound according to this aspect can be used in all cases of industrial production using conventional platinum catalysts, such as the production of cured silicone materials, silane coupling agents, or modified silicone oils.

The production method for an organosilicon compound according to this aspect can be particularly preferably used in the production of cured silicone materials. When at least one or both of the alkene and the hydrosilane are organopolysiloxane compounds (silicone), the above iron complex compound is highly soluble in these organopolysiloxane compounds, which in turn allows the reaction to proceed more efficiently and uniformly, and prevents the occurrence of uneven curing, whereby high-quality cured silicone materials can be produced.

### Examples

The present invention will be further described in more detail by way of the following examples and comparative examples, although the present invention is not limited to these examples as long as other possible examples do not depart from the spirit of the present invention.

### <Production of iron complex compounds>

Iron complex compounds with a tridentate ligand were produced according to the reaction schemes shown below.

It should be noted that iron compound (1), iron compound (2) and iron compound (3) were produced by reference to the methods described in the literatures (Kamitani, M.; Kusaka, H.; Toriyabe, T.; Yuge, H., Bull. Chem. Soc. Jpn., 2018, 91, 1429-1435. (Non-patent Literature 3) and Britovsek, G. J. P.; Gibson, V. C.; McTavish, S. J.; Solan, G. A.; White, A. J. P.; Williams, D. J.; Britovsek, G. J. P.; Kimberley, B. S.; Maddox, P. J. Chem. Commun. 1998, 849-850. (Non-patent Literature 4)).

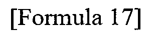

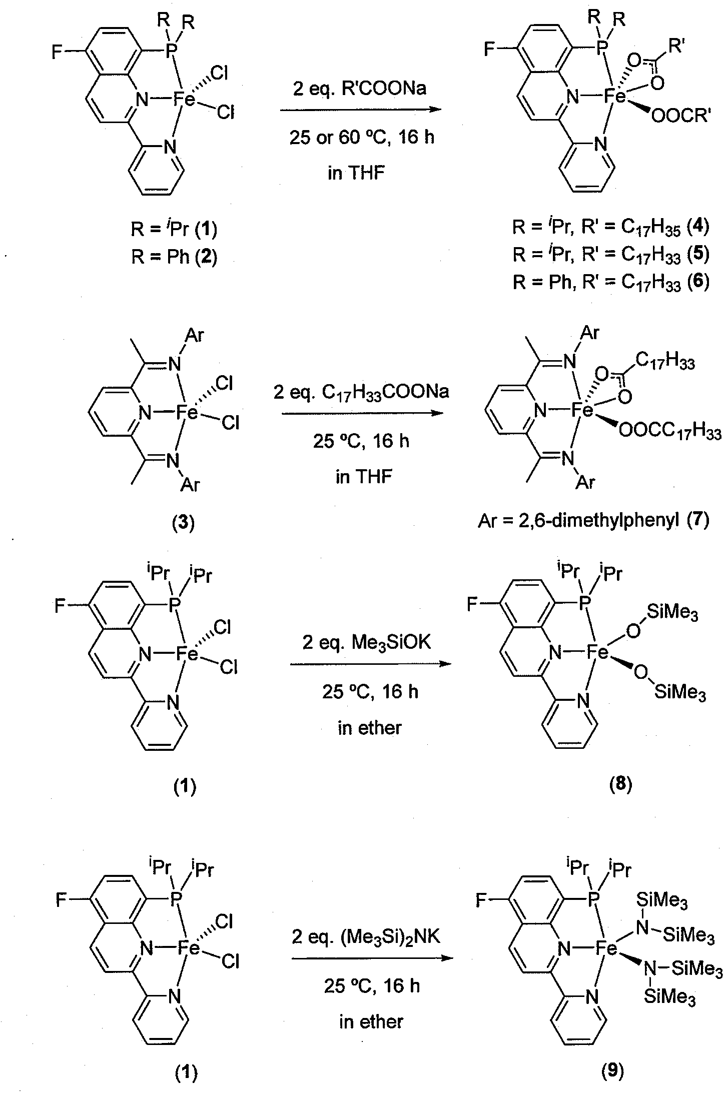

### [Example 1]

Under a nitrogen atmosphere, a solution containing iron compound (1) (200 mg, 0.428 mmol) and sodium stearate (262 mg, 0.856 mmol) in tetrahydrofuran (THF, 10 mL) was stirred at 60°C for 16 hours and then cooled to room temperature (25°C). After insoluble matter was removed by filtration, THF was distilled off under reduced pressure. Subsequently, the residue was dissolved in hexane (5 mL) and then filtered. The filtrate was dried under vacuum to thereby obtain the desired product, i.e., iron complex compound (4) (239 mg, 0.244 mmol, yield: 57%).

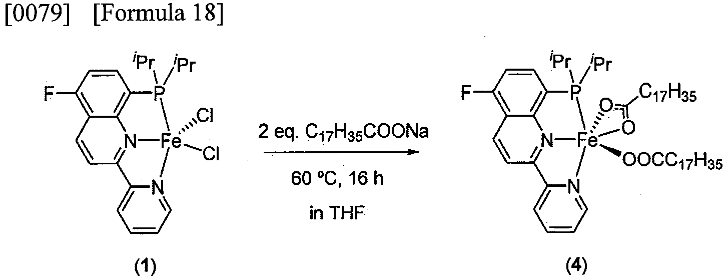

To verify the resulting compound, the product was analyzed by high-resolution mass spectrometry (HRMS/ESI) and nuclear magnetic resonance spectroscopy (NMR). HRMS (ESI) measurement: calculated for C₃₈H₅₇O₂N₂FPFe[M-C₁₇H₃₅CO₂]⁺: 679.3491; found: 679.3493. ¹H NMR (400 MHz, C₆D₆): δ 168.68, 158.10, 153.42, 137.96, 69.58, 63.83, 49.66, 47.07, 26.51, 25.64, 18.79, 17.96, 11.24, 9.64, 9.30, 4.28, 3.30, 1.27, 1.11, 0.91, 0.77, 0.49, 0.28, 0.16, -0.81, -12.81, -13.05. ¹⁹F{¹H} NMR (376 MHz, C₆D₆): δ - 10.77.

### [Example 2]

Under an argon atmosphere, a solution containing iron compound (1) (200 mg, 0.428 mmol) and sodium oleate (261 mg, 0.856 mmol) in THF (10 mL) was stirred at room temperature (25°C) for 16 hours. After insoluble matter was removed by filtration, THF was distilled off under reduced pressure. Subsequently, the residue was dissolved in hexane (5 mL) and then filtered. The filtrate was dried under vacuum to thereby obtain the desired product, i.e., iron complex compound (5) (384 mg, 0.394 mmol, yield: 92%).

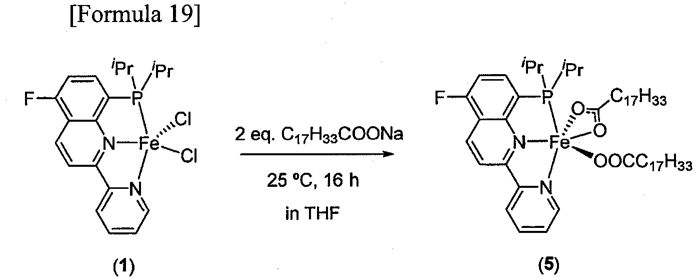

To verify the resulting compound, the product was analyzed by high-resolution mass spectrometry (HRMS/ESI) and nuclear magnetic resonance spectroscopy (NMR). Calculated for C₃₈H₅₅O₂N₂FPFe[M-C₁₇H₃₃CO₂]⁺: 677.3329; found: 677.3330. ¹H NMR (400 MHz, C₆D₆): δ 137.00, 68.61, 62.54, 46.75, 28.13, 25.64, 17.85, 9.68, 5.38, 5.29, 4.20, 3.30, 1.95, 1.78, 0.56, 0.29, -0.59, -12.99. ¹⁹F{¹H} NMR (376 MHz, C₆D₆): δ - 11.53.

### [Example 3]

Under an argon atmosphere, a solution containing iron compound (2) (229 mg, 0.428 mmol) and sodium oleate (261 mg, 0.856 mmol) in THF (10 mL) was stirred at room temperature (25°C) for 16 hours. After insoluble matter was removed by filtration, THF was distilled off under reduced pressure. Subsequently, the residue was washed with hexane (2 mL, twice) and then dried under vacuum to thereby obtain the desired product, i.e., iron complex compound (6) (201 mg, 0.193 mmol, yield: 45%).

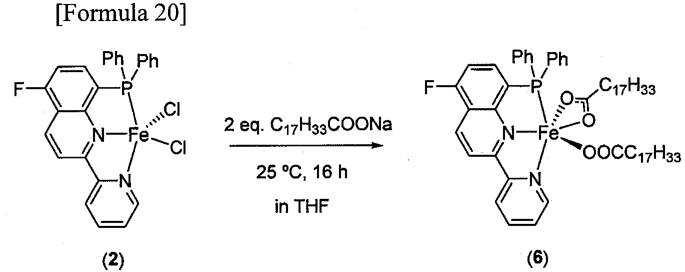

To verify the resulting compound, the product was analyzed by high-resolution mass spectrometry (HRMS/ESI) and nuclear magnetic resonance spectroscopy (NMR). Calculated for C₄₄H₅₁O₂N₂FPFe[M-C₁₇H₃₃CO₂]⁺: 745.3016; found: 745.3015. ¹H NMR (400 MHz, C₆D₆): δ 73.37, 64.38, 48.99, 24.30, 21.72, 19.38, 15.81, 8.58, 8.42, 8.40, 7.97, 7.52, 7.50, 6.93, 6.63, 6.58, 6.38, 5.47, 3.59, 2.09, 1.26, 1.11, 0.88, -5.08, -10.98. ¹⁹F{¹H} NMR (376 MHz, C₆D₆): δ -10.86.

### [Example 4]

Under an argon atmosphere, a solution containing iron compound (3) (212 mg, 0.428 mmol) and sodium oleate (261 mg, 0.856 mmol) in THF (10 mL) was stirred at room temperature (25°C) for 16 hours. After insoluble matter was removed by filtration, THF was distilled off under reduced pressure. Subsequently, the residue was dissolved in hexane (5 mL) and then filtered. The filtrate was dried under vacuum to thereby obtain the desired product, i.e., iron complex compound (7) (378 mg, 0.377 mmol, yield: 88%).

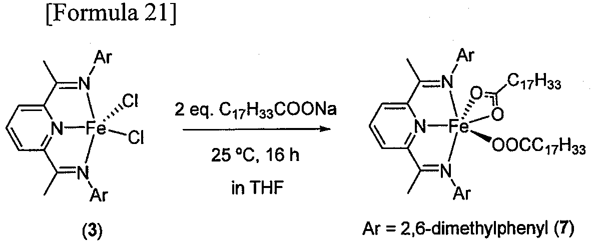

To verify the resulting compound, the product was analyzed by high-resolution mass spectrometry (HRMS/ESI) and nuclear magnetic resonance spectroscopy (NMR). Calculated for C₄₃H₆₀O₂N₃Fe[M-C₁₇H₃₃CO₂]⁺: 706.4029; found: 706.4025. ¹H NMR (400 MHz, C₆D₆): δ 67.37, 40.27, 33.91, 31.36, 29.33, 27.71, 22.73, 14.57, 12.78, 11.24, 8.49, 7.96, 7.28, 7.06, 6.99, 6.97, 6.50, 5.54, 4.52, 4.14, 3.70, 3.18, 3.07, 2.50, 2.16, 2.03, 1.88, 1.29, 0.89, -10.77, -15.73.

### [Example 5]

Under an argon atmosphere, a solution containing iron complex compound (1) (253 mg, 0.542 mmol) and potassium trimethylsilanoxide (142 mg, 1.11 mmol) in diethyl ether (10 mL) was stirred for 16 hours at room temperature (25°C). After insoluble matter was removed by filtration, diethyl ether was distilled off under reduced pressure. Subsequently, the residue was washed with hexane (1 mL, twice) and then dried under vacuum to thereby obtain the desired product, i.e., iron complex compound (8) (63.9 mg, 0.108 mmol, yield: 20%).

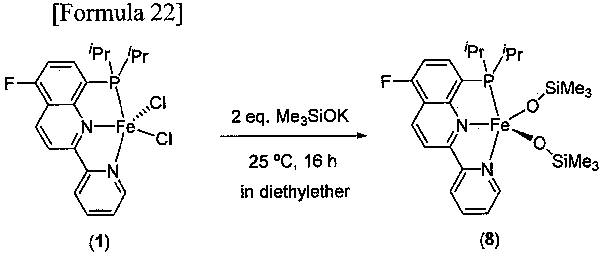

To verify the resulting compound, the product was analyzed by high-resolution mass spectrometry (HRMS/ESI) and nuclear magnetic resonance spectroscopy (NMR). HRMS (ESI) measurement: calculated for C₂₃H₃₁ON₂FPSiFe[M-Me₃SiO]⁺: 485.1271; found: 485.1262. ¹H NMR (600 MHz, C₆D₆): δ 164.77, 70.10, 66.01, 44.60, 15.54, 9.22, 2.95, 1.45, 0.86, 0.04, -27.90. ¹⁹F{¹H} NMR (376 MHz, C₆D₆): δ -14.65.

### [Example 6]

Under an argon atmosphere, a solution containing iron complex compound (1) (200 mg, 0.428 mmol) and potassium hexamethyldisilazide (166 mg, 0.835 mmol) in diethyl ether (10 mL) was stirred for 16 hours at room temperature (25°C). After insoluble matter was removed by filtration, diethyl ether was distilled off under reduced pressure. Subsequently, the residue was dissolved in hexane, filtered and then dried under vacuum to thereby obtain the desired product, i.e., iron complex compound (9) (216 mg, 0.283 mmol, yield: 66%).

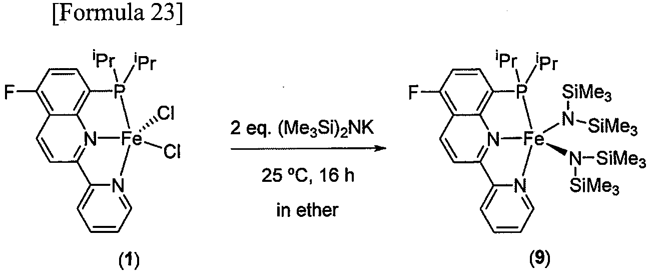

To verify the resulting compound, the product was analyzed by high-resolution mass spectrometry (HRMS/ESI) and nuclear magnetic resonance spectroscopy (NMR). HRMS (ESI) measurement: calculated for C₂₆H₄₀N₃FPSi₂Fe[M-(Me₃Si)₂N]⁺: 556.1826; found: 556.1823. ¹H NMR (400 MHz, C₆D₆): δ 69.01, 60.35, 57.54, 53.52, 46.02, 38.69, 36.59, 22.58, 14.27, 13.56, 10.17, 0.10, -3.58, -4.02, -7.02, -9.25, -11.31, -15.90, -21.55. ¹⁹F{¹H} NMR (376 MHz, C₆D₆): δ -24.64.

### [Example I]

Under a nitrogen atmosphere, a solution containing iron compound (1) (200 mg, 0.428 mmol) and sodium myristate (213 mg, 0.852 mmol) in tetrahydrofuran (THF, 10 mL) was stirred at 60°C for 16 hours and then cooled to room temperature (25°C). After insoluble matter was removed by filtration, THF was distilled off under reduced pressure. The residue was dried under vacuum to thereby obtain the desired product, i.e., iron complex compound (a) (246 mg, 0.289 mmol, yield: 68%).

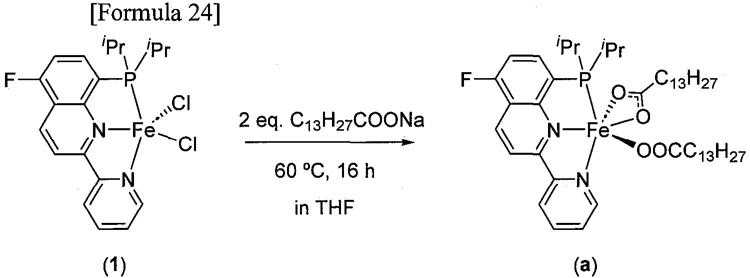

To verify the resulting compound, the product was analyzed by high-resolution mass spectrometry (HRMS/ESI) and nuclear magnetic resonance spectroscopy (NMR). HRMS (ESI) measurement: calculated for C₃₄H₄₉O₂N₂FPFe[M-C₁₃H₂₇CO₂]⁺: 623.2860; found: 628.2856. ¹H NMR signals were broad. ¹H NMR (600 MHz, C₆D₆): δ 168.29, 161.20, 152.15, 138.74, 70.02, 68.65, 49.94, 47.17, 26.50, 26.04, 25.67, 18.79, 18.58, 11.20, 8.75, 8.40, 8.13, 3.58, 2.48, 1.25, 0.98, 0.78, 0.50, 0.30, 0.15, -0.84, -13.87, -14.44. ¹⁹F{¹H} NMR (564 MHz, C₆D₆): δ -10.38.

### [Example II]

Under a nitrogen atmosphere, a solution containing iron compound (1) (200 mg, 0.428 mmol) and sodium lignocerate (333 mg, 0.852 mmol) in tetrahydrofuran (THF, 10 mL) was stirred at 60°C for 16 hours and then cooled to room temperature (25°C). After insoluble matter was removed by filtration, THF was distilled off under reduced pressure. The residue was dried under vacuum to thereby obtain the desired product, i.e., iron complex compound (b) (269 mg, 0.238 mmol, yield: 55%).

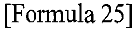

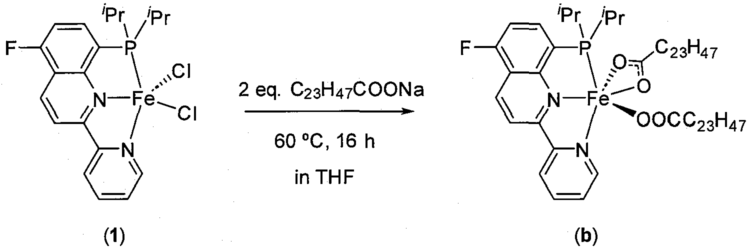

To verify the resulting compound, the product was analyzed by high-resolution mass spectrometry (HRMS/ESI) and nuclear magnetic resonance spectroscopy (NMR). HRMS (ESI) measurement: calculated for C₄₄H₆₉O₂N₂FPFe[M-C₂₃H₄₇CO₂]⁺: 763.4425; found: 763.4416. ¹H NMR (600 MHz, C₆D₆): δ 168.40, 159.03, 153.18, 138.95, 70.92, 70.06, 65.35, 64.00, 49.64, 47.59, 26.17, 25.51, 18.30, 17.05, 11.10, 8.56, 8.15, 6.33, 4.43, 3.37, 2.50, 1.26, 0.94, -13.75. ¹⁹F{¹H} NMR (564 MHz, C₆D₆): δ -10.05.

### <Production method for organosilicon compound>

As shown below, various studies were made on the production of organosilicon compounds through hydrosilylation reaction of alkenes.

### [Examples 7 to 10]

Under an argon atmosphere, iron complex compound (4), (5), (8) or (9) (10 µmol, 0.1 mol% each relative to phenylsilane) was added to a mixed solution of phenylsilane (1.32 mL, 10.7 mmol) and 1-octene (1.68 mL, 10.7 mmol). The reaction mixture was stirred at 25°C for 1 hour, and the product was confirmed by its ¹H NMR spectrum and GC-MS. In all cases, it was confirmed that the silane and the olefin were completely consumed, and the hydrosilylation product PhH₂SiC₈H₁₇ was produced in 100% yield. These results are shown in Table 1.
¹H NMR (600 MHz, CDCl₃) of PhH₂SiC₈H₁₇:
δ 7.59-7.55 (m, 2H, Ph), 7.42-7.33 (m, 3H, Ph), 4.28 (t, J=3.7Hz, 2H, SiH₂), 1.50-1.42 (m, 2H, CH₂), 1.40-1.33 (m, 2H, CH₂), 1.33-1.21 (m, 6H, CH₂), 1.01-0.84 (m, 2H, CH₂), 0.91-0.83 (m, 5H, CH₂ and CH₃).

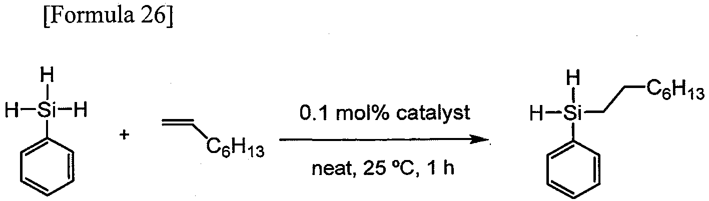

**[Table 1]**

| | Iron complex compound | Conversion rate |
|---|---|---|
| Example 7 | 4 | 100% |
| Example 8 | 5 | 100% |
| Example 9 | 8 | 100% |
| Example 10 | 9 | 100% |

### [Examples 11 to 24]

Under an argon atmosphere, iron complex compound (4), (7), (8), (9), (a) or (b) in a mixed solution of vinyl-terminated polydimethylsiloxane (A) and methylhydrosiloxane-dimethylsiloxane copolymer (B) was heated for 40 hours at the mixing ratio and the reaction temperature indicated in Table 2 to confirm the dissolution of each iron complex compound (the uniformity of each mixture) and the progression of curing. The results indicate that the iron complex compounds produced by the present invention having a long-chain alkyl or an organosilyl structure are dissolved in the mixed solution of (A) and (B) and uniformly dispersed therein, whereby silicone will be evenly cured after heating.

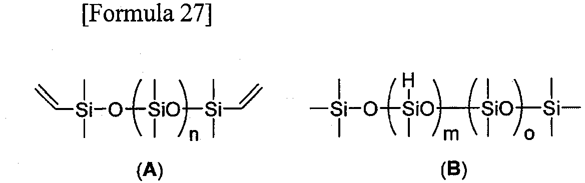

### [Comparative Examples 1 and 2]

Except for using iron complex compound (10) or (11) having no long-chain alkyl or organosilyl structure, an experiment was conducted under the same conditions as used in Example 11. These iron complex compounds were not uniformly dissolved, as a result of which no curing proceeded or uneven curing occurred. Iron complex compounds (10) and (11) were produced by the methods described in Kamitani, M.; Kusaka, H.; Toriyabe, T.; Yuge, H., Bull. Chem. Soc. Jpn., 2018, 91, 1429-1435. (Non-patent Literature 3) and JP 2020-117474 A (Patent Literature 1).

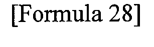

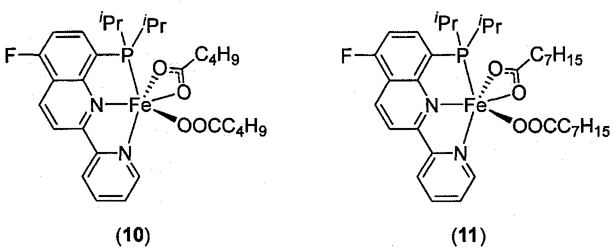

### [Comparative Example 3]

Under a nitrogen atmosphere, a solution containing iron compound (1) (200 mg, 0.428 mmol) and sodium laurate (189 mg, 0.852 mmol) in tetrahydrofuran (THF, 10 mL) was stirred at 60°C for 16 hours and then cooled to room temperature (25°C). After insoluble matter was removed by filtration, THF was distilled off under reduced pressure. The residue was dried under vacuum to thereby obtain the desired product, i.e., iron complex compound (c) (292 mg, 0.367 mmol, yield: 86%).

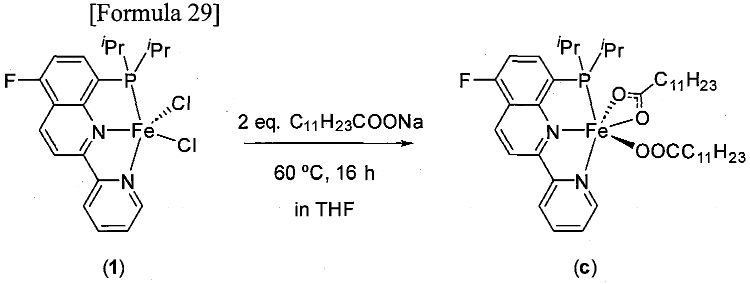

To verify the resulting compound, the product was analyzed by high-resolution mass spectrometry (HRMS/ESI) and nuclear magnetic resonance spectroscopy (NMR). HRMS (ESI) measurement: calculated for C₃₂H₄₅O₂N₂FPFe[M-C₁₁H₂₃CO₂]⁺: 595.2547; found: 595.2544. ¹H NMR (600 MHz, C₆D₆): δ 139.34, 70.18, 68.79, 62.95, 50.03, 47.21, 26.58, 25.75, 18.67, 18.22, 11.22, 9.67, 9.23, 8.75, 8.40, 8.09, 6.58, 2.48, 2.11, 1.78, - 0.32, -0.63, -13.95, -14.51. ¹⁹F{¹H} NMR (564 MHz, C₆D₆): δ -10.09.

Except for using the thus obtained iron complex compound (c) having no long-chain alkyl, an experiment was conducted under the same conditions as used in Example 11. The iron complex compound was not uniformly dissolved, as a result of which uneven curing occurred.

The results of Examples 11 to 24 and Comparative Examples 1 to 3 are shown in Table 2.

In the table, the iron complex compounds were determined to be "soluble" when uniformly dissolved in the mixture, and were determined to be "insoluble" when not uniformly dissolved due to the presence of insoluble matter visually observed. Likewise, as to the progression of curing, the mixtures were visually evaluated for the presence or absence of flowability, and a mixture which was cured and showed no flowability was determined to be "cured" while a mixture which was not cured and remained in a flowable liquid state was determined to be "uncured." For evaluation of uneven curing, the cured mixtures were crushed with a metal bar or the like to give a size one-tenth or less of their original size, and a case showing no liquid from the inside was determined to be "absence" while a case showing some liquid from the inside was determined to be "presence."

As shown in Table 2, iron complex compounds having a hydrocarbon group containing 13 or more carbon atoms or having an organosilyl structure were able to be dissolved in the mixed solution of (A) and (B) and uniformly dispersed therein, which in turn allowed silicone to be evenly cured after heating (Examples 11 to 24).

On the other hand, when the number of carbon atoms in the hydrocarbon group was small, such complex compounds were not dissolved in the mixed solution of (A) and (B), as a result of which no curing proceeded (Comparative Example 1) or uneven curing occurred even when mixtures were cured (Comparative Examples 2 and 3).

**[Table 2]**

| | Iron complex compound /parts by mass | (A) | | (B) | | | Temperature Dissolution of (°C) iron complex compound | | Curing | Uneven curing |
|---|---|---|---|---|---|---|---|---|---|---|
| | | Molecular weight | parts by mass | Molecular weight | parts by mass | m/o ratio | | | | |
| Example 11 | (4)/6 | 9400 | 1000 | 2000 | 50 | 1/4 | 160 | soluble | cured | absence |
| Example 12 | (4)/6 | 17200 | 1000 | 2000 | 50 | 1/4 | 160 | soluble | cured | absence |
| Example 13 | (4)/6 | 9400 | 1000 | 1000 | 30 | 1/1 | 160 | soluble | cured | absence |
| Example 14 | (4)/6 | 9400 | 1000 | 2000 | 50 | 1/4 | 140 | soluble | cured | absence |
| Example 15 | (4)/6 | 9400 | 1000 | 2000 | 50 | 1/4 | 120 | soluble | cured | absence |
| Example 16 | (4)/1 | 9400 | 1000 | 2000 | 50 | 1/4 | 160 | soluble | cured | absence |
| Example 17 | (4)/6 | 9400 | 1000 | 2000 | 500 | 1/4 | 160 | soluble | cured | absence |
| Example 18 | (7)/12 | 9400 | 1000 | 2000 | 50 | 1/4 | 160 | soluble | cured | absence |
| Example 19 | (8)/7 | 9400 | 1000 | 2000 | 50 | 1/4 | 160 | soluble | cured | absence |
| Example 20 | (9)/10 | 9400 | 1000 | 2000 | 50 | 1/4 | 160 | soluble | cured | absence |
| Example 21 | (9)/10 | 9400 | 1000 | 2000 | 50 | 1/4 | 80 | soluble | cured | absence |
| Example 22 | (9)/10 | 9400 | 1000 | 2000 | 50 | 1/4 | 25 | soluble | cured | absence |
| Example 23 | (a)/11 | 9400 | 1000 | 2000 | 50 | 1/4 | 160 | soluble | cured | absence |
| Example 24 | (b)/15 | 9400 | 1000 | 2000 | 50 | 1/4 | 160 | soluble | cured | absence |
| Comparative Example 1 | (10)/7 | 9400 | 1000 | 2000 | 50 | 1/4 | 160 | insoluble | uncured | - |
| Comparative Example 2 | (11)/9 | 9400 | 1000 | 2000 | 50 | 1/4 | 160 | insoluble | cured | presence |
| Comparative Example 3 | (c)/10 | 9400 | 1000 | 2000 | 50 | 1/4 | 160 | insoluble | cured | presence |

### Industrial Applicability

The iron complex compound of the present invention can be preferably used as a hydrosilylation catalyst in the organosilicon industry, particularly in the production of cured silicone materials and organosilicon compounds. The iron complex compound of the present invention has high solubility in silicone, and is therefore particularly useful in applications using silicone as a source material, and allows efficient production of organosilicon compounds and cured silicone materials.

## Claims

1. An iron complex compound represented by formula (1):
(L)FeAₙ₁ (1)
wherein
n1 is 2 or 3,
each A is independently -OR¹, -OC(=O)R², or -NR³R⁴;
R¹, R², R³ and R⁴ are each independently an optionally substituted hydrocarbon group containing 13 to 24 carbon atoms, or -Si(CH₃)₂-[OSi(CH₃)₂]ₘ-CH₃, wherein m is an integer of 0 to 11;
when two A are each -OR¹, wherein R¹ is an optionally substituted hydrocarbon group containing 13 to 24 carbon atoms, both R¹ may be linked together to form the cyclic structure -O-C(R^{a})-O-, wherein R^{a} is an optionally substituted hydrocarbon group containing 13 to 24 carbon atoms; and
L represents a tridentate ligand of formula (L-1): 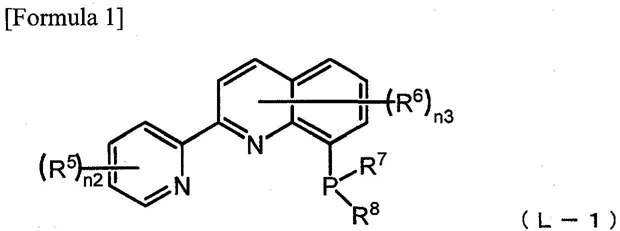 wherein
R⁵ and R⁶ are each independently an optionally substituted aliphatic hydrocarbon group containing 1 to 6 carbon atoms, an optionally substituted aromatic hydrocarbon group containing 6 to 12 carbon atoms, or a halogen atom;
R⁷ and R⁸ are each independently an optionally substituted aliphatic hydrocarbon group containing 1 to 12 carbon atoms, or an optionally substituted aromatic hydrocarbon group containing 6 to 12 carbon atoms, provided that when R⁷ and R⁸ are each an optionally substituted aliphatic hydrocarbon group containing 1 to 12 carbon atoms, R⁷ and R⁸ may be linked together to form a cyclic structure;
n2 is an integer of 0 to 4, provided that R⁵ is attached to a carbon atom in the pyridine scaffold; and
n3 is an integer of 0 to 5, provided that R⁶ is attached to a carbon atom in the quinoline scaffold,
or formula (L-2): 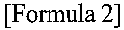 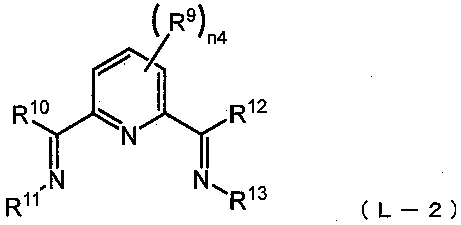 wherein
each R⁹ is independently an optionally substituted aliphatic hydrocarbon group containing 1 to 6 carbon atoms, an optionally substituted aromatic hydrocarbon group containing 6 to 12 carbon atoms, or a halogen atom;
R¹⁰, R¹¹, R¹² and R¹³ are each independently a hydrogen atom, an optionally substituted aliphatic hydrocarbon group containing 1 to 12 carbon atoms, or an optionally substituted aromatic hydrocarbon group containing 6 to 12 carbon atoms, provided that when R¹⁰ and R¹¹ are each an optionally substituted aliphatic hydrocarbon group containing 1 to 12 carbon atoms, R¹⁰ and R¹¹ may be linked together to form a cyclic structure, and when R¹² and R¹³ are each an optionally substituted aliphatic hydrocarbon group containing 1 to 12 carbon atoms, R¹² and R¹³ may be linked together to form a cyclic structure; and
n4 is an integer of 0 to 3, provided that R⁹ is attached to a carbon atom in the pyridine scaffold.

2. The iron complex compound according to claim 1, which is represented by formula (1A-1), (1A-2) or (1A-3): 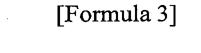 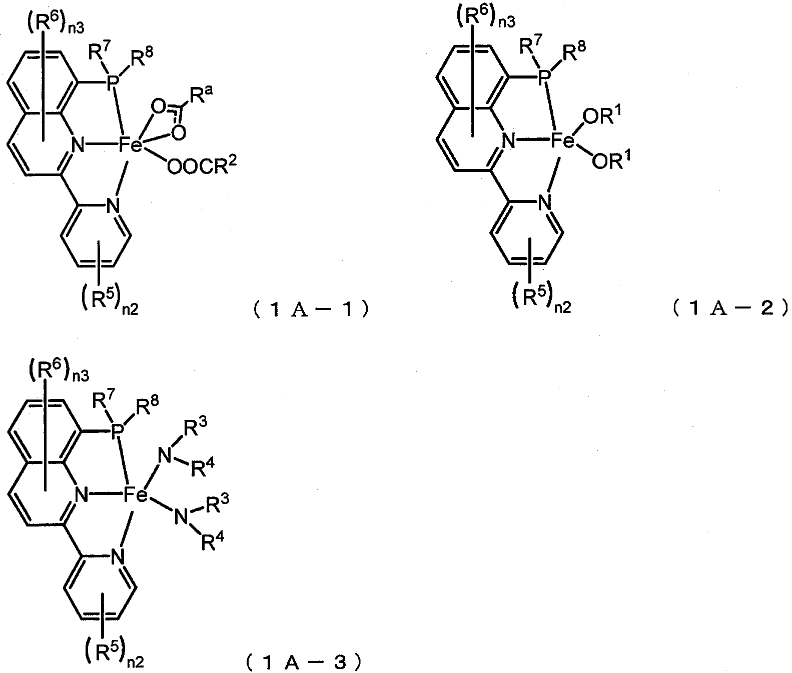 wherein R¹, R², R³, R⁴, R⁵, R⁶, R⁷, R⁸, R^{a}, n2 and n3 are as defined above.

3. The iron complex compound according to claim 1, which is represented by formula (1B-1), (1B-2) or (1B-3): 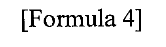 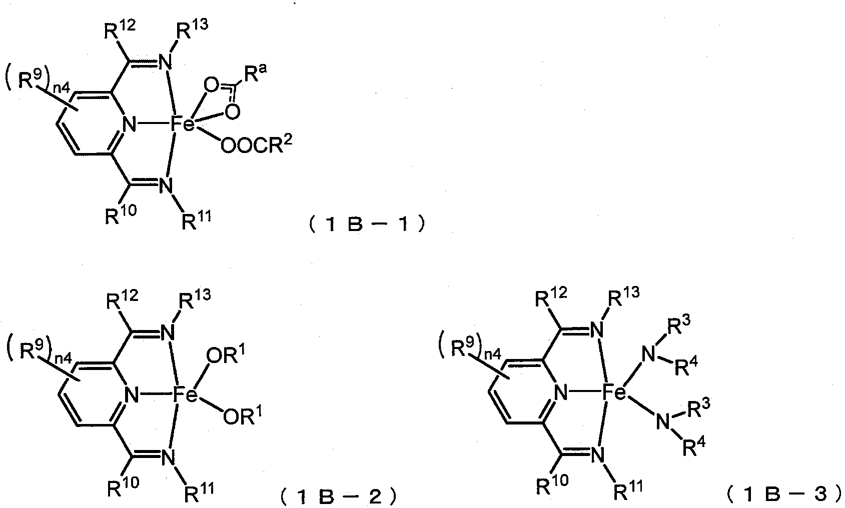 wherein R¹, R², R³, R⁴, R⁹, R¹⁰, R¹¹, R¹², R¹³, R^{a} and n4 are as defined above.

4. A method for producing the iron complex compound according to claim 1 or 2, comprising reacting an iron compound represented by formula (1a-1): 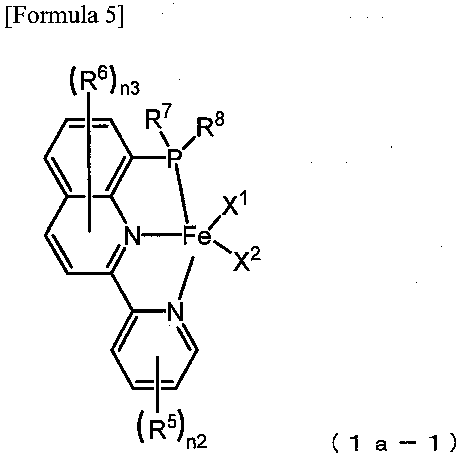 wherein
X¹ and X² are each independently a halogen atom;
R⁵ and R⁶ are each independently an optionally substituted aliphatic hydrocarbon group containing 1 to 6 carbon atoms, an optionally substituted aromatic hydrocarbon group containing 6 to 12 carbon atoms, or a halogen atom;
R⁷ and R⁸ are each independently an optionally substituted aliphatic hydrocarbon group containing 1 to 12 carbon atoms, or an optionally substituted aromatic hydrocarbon group containing 6 to 12 carbon atoms, provided that when R⁷ and R⁸ are each an optionally substituted aliphatic hydrocarbon group containing 1 to 12 carbon atoms, R⁷ and R⁸ may be linked together to form a cyclic structure;
n2 is an integer of 0 to 4, provided that R⁵ is attached to a carbon atom in the pyridine scaffold; and
n3 is an integer of 0 to 5, provided that R⁶ is attached to a carbon atom in the quinoline scaffold,
with a compound represented by:
R¹OM, R²COOM, or NR³R⁴M (1a-2)
wherein
R¹, R², R³ and R⁴ are each independently an optionally substituted hydrocarbon group containing 13 to 24 carbon atoms, or -Si(CH₃)₂-[OSi(CH₃)₂]ₘ-CH₃, wherein m is an integer of 0 to 11; and
each M is independently an alkali metal.

5. A method for producing the iron complex compound according to claim 1 or 3, comprising reacting an iron compound represented by formula (1b-1): 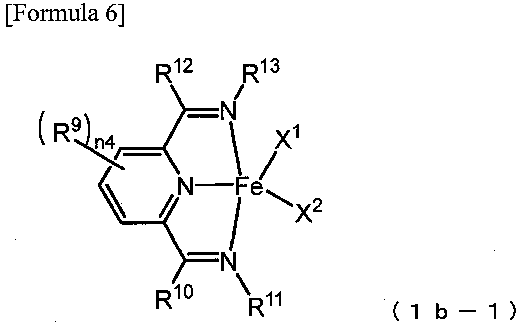 wherein
X¹ and X² are each independently a halogen atom;
each R⁹ is independently an optionally substituted aliphatic hydrocarbon group containing 1 to 6 carbon atoms, an optionally substituted aromatic hydrocarbon group containing 6 to 12 carbon atoms, or a halogen atom;
R¹⁰, R¹¹, R¹² and R¹³ are each independently a hydrogen atom, an optionally substituted aliphatic hydrocarbon group containing 1 to 12 carbon atoms, or an optionally substituted aromatic hydrocarbon group containing 6 to 12 carbon atoms, provided that when R¹⁰ and R¹¹ are each an optionally substituted aliphatic hydrocarbon group containing 1 to 12 carbon atoms, R¹⁰ and R¹¹ may be linked together to form a cyclic structure, and when R¹² and R¹³ are each an optionally substituted aliphatic hydrocarbon group containing 1 to 12 carbon atoms, R¹² and R¹³ may be linked together to form a cyclic structure; and
n4 is an integer of 0 to 3, provided that R⁹ is attached to a carbon atom in the pyridine scaffold,
with a compound represented by:
R¹OM, R²COOM, or NR³R⁴M (1b-2)
wherein
R¹, R², R³ and R⁴ are each independently an optionally substituted hydrocarbon group containing 13 to 24 carbon atoms, or -Si(CH₃)₂-[OSi(CH₃)₂]ₘ-CH₃, wherein m is an integer of 0 to 11; and
each M is independently an alkali metal.

6. A method for producing an organosilicon compound, comprising reacting an alkene with a hydrosilane in the presence of the iron complex compound according to claim 1, 2 or 3.
